(19) Europäisches Patentamt
European Patent Office
Office européen des brevets

(11) **EP 3 950 113 B1**

(12) **EUROPÄISCHE PATENTSCHRIFT**

(45) Veröffentlichungstag und Bekanntmachung des Hinweises auf die Patenterteilung:
**01.03.2023   Patentblatt 2023/09**

(21) Anmeldenummer: **20190052.9**

(22) Anmeldetag: **07.08.2020**

(51) Internationale Patentklassifikation (IPC):
**B01J 8/02** (2006.01)       **B01J 19/24** (2006.01)
**B01J 8/06** (2006.01)

(52) Gemeinsame Patentklassifikation (CPC):
**B01J 8/025; B01J 8/0285; B01J 8/067;**
**B01J 19/243;** B01J 2208/00389; B01J 2208/00415;
B01J 2219/00132; B01J 2219/00135

(54) **REAKTOR UND VERFAHREN ZUR DURCHFÜHRUNG EINER CHEMISCHEN REAKTION**

REACTOR AND METHOD FOR PERFORMING A CHEMICAL REACTION

RÉACTEUR ET PROCÉDÉ DE MISE EN OEUVRE D'UNE RÉACTION CHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.02.2022   Patentblatt 2022/06**

(73) Patentinhaber:
- **Linde GmbH**
  **82049 Pullach (DE)**
- **BASF SE**
  **67056 Ludwigshafen am Rhein (DE)**

(72) Erfinder:
- **Posselt, Dr. Heinz**
  **83043 Bad Aibling (DE)**
- **Hofstätter, Martin**
  **81369 München (DE)**
- **Zellhuber, Dr. Mathieu**
  **82152 Martinsried (DE)**
- **Delhomme-Neudecker, Dr. Clara**
  **81825 München (DE)**

- **Jenne, Eric**
  **67454 Hassloch (DE)**
- **Kochendörfer, Kiara Aenne**
  **68159 Mannheim (DE)**
- **Shustov, Andrey**
  **67059 Ludwigshafen am Rhein (DE)**
- **Laib, Dr. Heinrich**
  **67117 Limburgerhof (DE)**
- **Kühn, Heinz-Jürgen**
  **67593 Westhofen (DE)**
- **Jacob, Reiner**
  **67691 Hochspeyer (DE)**

(74) Vertreter: **Reuß, Stephanie**
**Linde GmbH**
**Intellectual Property EMEA**
**Dr.-Carl-von-Linde-Straße 6-14**
**82049 Pullach (DE)**

(56) Entgegenhaltungen:
**EP-A1- 3 075 704       WO-A1-2015/123578**
**WO-A1-2015/197181**

## Beschreibung

Die Erfindung betrifft einen Reaktor und ein Verfahren zur Durchführung einer chemischen Reaktion gemäß den Oberbegriffen der unabhängigen Patentansprüche.

Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind.

Es ist grundsätzlich auch denkbar, eine elektrische Beheizung von Reaktoren mittels Gleichstrom oder einphasigem Wechselstrom vorzunehmen. In diesem Fall kann keine Sternschaltung mit einem potentialfreien Sternpunkt realisiert werden, die Stromeinspeisung lässt sich jedoch grundsätzlich in ähnlicher Weise realisieren. Die vorliegende Erfindung eignet sich für beide Varianten der elektrischen Beheizung.

Insbesondere die Stromeinspeisung hat sich bei derartigen elektrisch beheizten Reaktoren aufgrund der hohen Stromflüsse und Temperaturen als herausfordernd erwiesen. Die Erfindung stellt sich daher die Aufgabe, entsprechende elektrisch beheizte Reaktoren zur Durchführung chemischer Reaktionen zu verbessern.

Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In dem zumeist teilweise elektrifizierten Ofenkonzept (der Begriff "Ofen" wird üblicherweise zur Bezeichnung eines entsprechenden Reaktors bzw. zumindest von dessen thermisch isoliertem Reaktionsraum verwendet), das der vorliegenden Erfindung zugrunde liegt, wird zumindest eines der Reaktionsrohre bzw. entsprechende Rohrstrecken hiervon (nachfolgend auch kurz als "Rohre" bezeichnet) selbst als elektrischer Widerstand benutzt, um Wärme zu erzeugen. Diese Strategie hat den Vorteil eines höheren Wirkungsgrads im Vergleich zu einer indirekten Erwärmung durch externe elektrische Heizkörper sowie einer höheren erreichbaren Wärmestromdichte. Im Rahmen der Erfindung wird die Möglichkeit eingeschlossen, einen Teil der gesamten im Ofen aufgewandten Heizleistung auch über Verfeuerung chemischer Energieträger bereitzustellen.

Ist daher hier von einer elektrischen Beheizung die Rede, schließt dies das Vorhandensein einer zusätzlichen nichtelektrischen Beheizung nicht aus. Es kann insbesondere auch vorgesehen sein, die Beiträge der elektrischen und nichtelektrischen Beheizung über die Zeit zu variieren, beispielsweise in Abhängigkeit von Stromangebot und -preis bzw. Angebot und Preis nichtelektrischer Energieträger wie beispielsweise Erdgas.

Die Stromeinspeisung erfolgt im Falle der Beheizung mit mehrphasigem Wechselstrom in die direkt beheizten Reaktionsrohre über M separat angeschlossene Phasen. Die stromleitenden Reaktionsrohre, die mit den M Phasen verbunden sind, werden an einem Sternpunkt vorteilhafterweise ebenfalls elektrisch verbunden. Die Phasenzahl M beträgt insbesondere 3, entsprechend der Phasenzahl üblicher Drehstromquellen bzw. Drehstromnetze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Ein Phasenversatz beträgt dabei insbesondere 360°/M , d.h. bei einem dreiphasigen Drehstrom 120°.

Durch die Sternschaltung am Sternpunkt wird in einer elektrischen Beheizung mit mehrphasigem Wechselstrom ein Potentialausgleich zwischen den Phasen erreicht, was eine elektrische Isolierung der angeschlossenen Rohrleitungen überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Die nachfolgend erläuterten, erfindungsgemäß vorgeschlagenen Maßnahmen eignen sich jedoch in gleicher Weise für die Verwendung von Gleichstrom und die vorliegende Erfindung kann sowohl in wechselstrom- als auch in gleichstrombeheizten Reaktoren oder auch in entsprechenden Mischformen zum Einsatz kommen. Bei einer Gleichstromanordnung ist gegenüber einer Wechselstromanordnung lediglich die Art der Stromquelle und der der Stromeinspeisung entgegengesetzte Bereich der Reaktionsrohre oder entsprechender strombeaufschlagter Abschnitte unterschiedlich. In letzterem wird eine elektrische Verbindung unterschiedlicher Rohrstrecken nur optional durchgeführt. Da in einer Gleichstromanordnung kein potentialfreier Sternpunkt vorliegt, sind geeignete Stromentnahmeelemente bereitzustellen, die den Stromfluss wieder sicher nach außen führen. Entsprechendes gilt grundsätzlich auch für ebenfalls verwendbaren einphasigen Wechselstrom.

Im Sprachgebrauch der Patentansprüche betrifft die vorliegende Erfindung dabei einen Reaktor zur Durchführung einer chemischen Reaktion (oder Erwärmung), der einen Reaktorbehälter (d.h. einen thermisch isolierten oder zumindest teilweise isolierten Bereich) und ein oder mehrere Reaktionsrohre aufweist, wobei eine Anzahl von Rohrstrecken des einen oder der mehreren Reaktionsrohre innerhalb des Reaktorbehälters verläuft, und wobei die Rohrstrecken in einem Stromeinspeisebereich zur elektrischen Beheizung der Rohrstrecken jeweils elektrisch mit einem oder mehreren Stromanschlüssen, und zwar im Fall einer Gleichstromanordnung mit einem oder mehreren Gleichstromanschlüssen und im Fall einer Wechselstromanordnung mit dem Phasenanschluss bzw. den Phasenanschlüssen ("Außenleitern") der Wechselstromquelle verbunden oder verbindbar sind, wie im Einzelnen unten erläutert.

Eine Stromeinspeisung im hier verstandenen Sinn erfolgt durch Anlegen einer Spannung, die einen Stromfluss bewirkt. Die Bereitstellung einer Spannung und die Einspeisung eines Stroms sind daher gleichbedeutend; entsprechendes gilt für die Begriffe Stromquelle und Spannungsquelle, Stromanschluss und Spannungsanschluss sowie vergleichbare Begriffe.

Wie erwähnt, werden dabei in mit mehrphasigem Wechselstrom betriebenen Anordnungen über die Phasenanschlüsse jeweils Wechselspannungen bereitgestellt, die in der oben erläuterten Weise phasenverschoben sind. Als mehrphasige Wechselstromquellen können in solchen Anordnungen Versorgungsnetze oder geeignete Generatoren und/oder Transformatoren dienen. In derartigen Anordnungen können insbesondere in an sich bekannter Weise Sternschaltungen gebildet werden, deren Sternpunkte idealerweise potentialfrei sind.

Im Fall von mit Gleichstrom betriebenen Anordnungen werden über die Gleichstromanschlüsse dagegen gleiche oder unterschiedliche statische elektrische Potentiale eingespeist. Da eine Sternpunktschaltung hier nicht möglich ist, müssen Stromentnahme- bzw. Erdungselemente bereitgestellt werden. Einphasige Wechselstromquellen können vergleichbar verwendet werden. Auch hier ist keine Sternpunktbildung möglich. Die Begriffe "Einspeisung" und "Entnahme" können sich auf die physikalische oder technische Stromrichtung beziehen.

In dem Reaktorbehälter verlaufen die Rohrstrecken insbesondere zumindest abschnittsweise frei, d.h. ohne eine mechanische Abstützung, ohne elektrische Kontaktierung und/oder ohne fluidische oder rein mechanische Querverbindungen miteinander. Sie weisen dabei insbesondere im Wesentlichen vollständig gerade Abschnitte auf, wobei unter "im Wesentlichen gerade" verstanden werden soll, dass eine Winkelabweichung von weniger als 10°oder 5°v orliegt.

Insbesondere die Spaltreaktionen beim Steamcracken sind stark endotherme Reaktionen. Für die Bereitstellung der nötigen Energie für die Reaktion mittels direkter Beheizung (Ohmscher Widerstand) werden daher hohe Stromstärken benötigt, die in dem angesprochenen Reaktorkonzept von einem oder mehreren außerhalb des Reaktors platzierten Transformatoren bereitgestellt werden.

Der elektrische Strom muss mit möglichst geringen Verlusten (geringer elektrischer Widerstand) von außen in das Innere des thermisch isolierten Reaktors und zu den prozessführenden Bereichen geleitet werden. In letzteren führt die endotherme Reaktion zusammen mit dem sehr schnell strömenden Prozessmedium auf der Rohrinnenseite (hoher Wärmeübergang) zu einer sehr effektiven Kühlung der Reaktorrohre, bzw. einer sehr hohen Wärmestromdichte an der Rohrinnenseite. Damit wird in den prozessführenden Rohren die gewünschte direkte Wärmeübertragung vom zumindest teilweise elektrisch beheizten Rohrmaterial zum Prozessgas erreicht.

Eine besondere Problemstellung betrifft die oben erwähnte verlustarme Zuführung des Starkstroms zu den prozessführenden Rohren. Diese Zuführung muss zwangsläufig, sofern eine Stromeinspeisung in die Rohre innerhalb des Reaktors erfolgen soll, über Leitungen erfolgen, die nicht durch einen direkten konvektiven Wärmeübergang an ein kühleres Prozessgas gekühlt werden können, wie auch nachfolgend noch erläutert. Dabei darf es nicht zu einer unzulässigen Temperaturüberhöhung in den weniger effizient gekühlten Bereichen kommen. Darüber hinaus muss über diese Zuführung auch ein steiler Temperaturanstieg von bis zu 900 K (maximale Temperaturdifferenz zwischen Umgebung und Reaktor) innerhalb kurzer Weglängen (teilweise weniger als 1 Meter) überwunden werden.

Zur Reduzierung der thermischen Verluste und damit zum Erreichen eines hohen Systemwirkungsgrads ist es zwingend erforderlich, die elektrisch direkt beheizten Reaktorrohe in einer isolierten Box (hier als Reaktorbehälter bezeichnet) zu platzieren. Beim Durchdringen der thermisch isolierten Wand des Reaktorbehälters muss der Stromleiter dabei eine quasi-adiabate Zone überwinden, ohne dass in diesen Bereichen unerlaubt hohe lokale Temperaturen auftreten.

Erfindungsgemäß sind zur Erreichung dieses Ziels in dem Stromeinspeisebereich Stromeinspeiseanordnungen vorgesehen, an die jeweils eine Rohrstrecke oder jeweils eine Gruppe der Rohrstrecken elektrisch angebunden ist. Die Rohrstrecken sind in einer solchen Anzahl vorgesehen, dass jeweils eine oder jeweils eine Gruppe von mehreren Rohrstrecken mit jeweils einer der Stromeinspeiseanordnungen verbindbar ist und umgekehrt. Die Anzahl der Stromeinspeiseanordnungen richtet sich dabei nach der Anzahl der Phasenanschlüsse der mehrphasigen Wechselstromquelle im Falle einer Wechselstromanordnung bzw. entspricht diese Anzahl der Anzahl der Gleichstromanschlüsse. Sie kann bei Verwendung einer Wechselstromanordnung gleich der Anzahl von Phasenanschlüssen sein oder ein ganzzahliges Vielfaches hiervon betragen. In letzterem Fall können jeweils beispielsweise zwei der Stromeinspeiseanordnungen mit jeweils einem der Phasenanschlüsse der Wechselstromquelle verbunden sein usw.

Die Stromeinspeiseanordnungen umfassen erfindungsgemäß jeweils einen ersten und einen zweiten Abschnitt, wobei der erste Abschnitt sich ausgehend von der jeweiligen Rohrstrecke oder der jeweiligen Gruppe von Rohrstrecken oder von einem jeweils hiermit (also der jeweiligen Rohrstrecke oder der jeweiligen Gruppe von Rohrstrecken) verbundenen Element entlang einer Längsachse erstreckt, wobei der erste Abschnitt den zweiten Abschnitt oder der zweite Abschnitt den ersten Abschnitt jeweils in einem Bereich der Stromeinspeiseanordnungen zumindest teilweise hülsenartig umgibt, und wobei der erste Abschnitt und der zweite Abschnitt schräg zu der Längsachse ausgerichtete Kontaktflächen zur Kontaktierung miteinander aufweisen. Die Längsachse kann, muss aber nicht parallel zu einer Längsachse der jeweiligen Rohrstrecken liegen. Mit der Angabe "zumindest teilweise" sollen Fälle erfasst werden, in denen der jeweils umgebende Abschnitt beispielsweise seitliche Ausschnitte der aufweist, die beispielsweise für die Aufnahme abstehender Kühlrippen des umgebenen Abschnitts vorgesehen sind.

Erfindungsgemäß verlaufen die Stromeinspeiseanordnungen ferner jeweils an einem Wanddurchtritt durch eine Wand des Reaktorbehälters, wobei insbesondere die Bereiche der Stromeinspeiseanordnungen, in denen der erste Abschnitt den zweiten Abschnitt oder der zweite Abschnitt den ersten Abschnitt jeweils zumindest teilweise hülsenartig umgibt, in den Wanddurchtritten angeordnet sind. Die "Wand" des Reaktorbehälters kann insbesondere auch eine Zwischenwand zu einem weiteren Raum sein, in welchem die Stromeinspeiseanordnungen, beispielsweise mit flexiblen Litzen oder Kabeln, angeschlossen sind, und der seinerseits mittels wenigstens einer weiteren Wand nach außen begrenzt ist. Die Wand ist insbesondere thermisch isolierend ausgebildet.

Die ersten Abschnitte der Stromeinspeiseanordnungen können im Rahmen der vorliegenden Erfindung in beliebiger Weise mit den jeweiligen Rohrstrecken oder den jeweiligen Gruppen von Rohrstrecken verbunden sein. Sie können beispielsweise an einen oder mehrere Umkehrbögen oder gerade Rohrabschnitte angeschweißt, angegossen oder einstückig mit solchen Umkehrbögen oder geraden Rohrabschnitten ausgebildet sein, beispielsweise durch Schleuderguss. Die ersten Abschnitte können auch Fluidpassagen aufweisen, an die die jeweilige Rohrstrecke oder die jeweilige Gruppe von Rohrstrecken stoffschlüssig angebunden, also beispielsweise angeschweißt, sind. Allgemeiner gesprochen besteht also im Rahmen der vorliegenden Erfindung eine stoffschlüssige Verbindung, insbesondere in Form einer Schweißverbindung, zwischen den ersten Abschnitten der Stromeinspeiseanordnungen und den jeweiligen Rohrstrecken oder den jeweiligen Gruppen von Rohrstrecken, oder die ersten Abschnitte der Stromeinspeiseanordnungen und die jeweiligen Rohrstrecken oder die jeweiligen Gruppen von Rohrstrecken sind einstückig ausgebildet.

Beispielsweise kann oder können, wie unten noch genauer beschrieben, jeweils gekrümmte Rohrabschnitte gerade oder in Form eines Umkehrbogens durch die Stromeinspeiseanordnungen verlaufen. Auf diese Weise können durch einen Teil der ersten Abschnitte der Stromeinspeiseanordnungen insbesondere wandverstärkte Krümmer ausgebildet werden. Bei Reaktionsrohren ohne Umkehrbögen kann es sich insbesondere um wandverstärkte Manschetten handeln.

Je nach der spezifischen Ausgestaltung können die Rohrstrecken, die beispielsweise zwischen dem Stromeinspeisebereich und einem Erdungsanschluss oder einer Sternbrücke in dem Reaktorbehälter verlaufen, jeweils an vorgefertigte Komponenten in Form der ersten Abschnitte der Stromeinspeiseabschnitte in dem eine oder mehrere Fluidpassagen verläuft oder verlaufen, angeschweißt sein, oder die ersten Abschnitte können an die Rohrstrecken angegossen sein. Im letzteren Fall können fortlaufende Rohre bereitgestellt werden und die ersten Abschnitte der Stromeinspeiseanordnungen können durch ein An- oder Umgießen oder Anschweißen gefertigt werden.

Es versteht sich, dass die ersten Abschnitte der Stromeinspeiseanordnungen einen Fluidstrom in den jeweiligen Rohrstrecken nicht unterbrechen, so dass stets ein durchgängiger Kanal für das durch die Rohrstrecken zu führende Prozessfluid bilden. Insbesondere setzt sich dabei ein Rohrinnenraum der jeweiligen Rohrstrecken auch im Bereich der Stromeinspeiseanordnungen fort, und zwar insbesondere ohne eine nennenswerte Verjüngung oder Erweiterung, wobei eine "nennenswerte" Verjüngung oder Erweiterung eine Verjüngung oder Erweiterung um mehr als 10 % der Querschnittsfläche bezeichnen soll.

Der Begriff " Stromeinspeiseanordnungen" wird hier verwendet, um auszudrücken, dass es sich bei entsprechenden Anordnungen um solche Anordnungen handelt, in denen über metallische Bauteile eine leitende Verbindung zu einem Stromanschluss besteht, auch wenn es sich in bestimmten Ausgestaltungen der Erfindung zumindest bei den ersten Abschnitten der "Stromeinspeiseanordnungen" um kontinuierliche Fortsetzungen der Rohrstrecken handelt.

In einer besonders bevorzugten Ausgestaltung der vorliegenden Erfindung können die schrägen Kontaktflächen der ersten und der zweiten Abschnitte der Stromeinspeiseanordnungen als konische Innen- und Außenflächen ausgebildet sein. Die konischen Innenflächen sind dabei insbesondere in dem jeweils den anderen Abschnitt zumindest teilweise hülsenartig umgebenden Abschnitt ausgebildet, und zwar insbesondere am inneren Ende einer zur Aufnahme des zumindest teilweise hülsenartig umgebenen Abschnitts ausgebildeten Ausnehmung. Die konischen Außenflächen sind insbesondere dem jeweils von dem anderen Abschnitt zumindest teilweise umgebenen Abschnitt ausgebildet, und zwar insbesondere am Ende eines stabförmigen Bereichs eines entsprechenden Abschnitts, der von dem jeweils anderen Abschnitt zumindest teilweise hülsenartig umgeben ist.

Auch kugelförmige oder halbkugelförmige bzw. abschnittsweise sphärische oder gekrümmte Kontaktflächen sollen im hier verstandenen Sinn als "schräg" angesehen werden; es können ferner Gewinde, Verschraubungen, oder in Form von Keilnaben oder Keilwellen ausgebildete Formen vorgesehen sein.

Nachfolgend ist wiederholt von "dem ersten Abschnitt der Stromeinspeiseanordnungen" bzw. von "dem zweiten Abschnitt der Stromeinspeiseanordnungen" die Rede. Dies dient lediglich der sprachlichen Vereinfachung und kann sich auf die ersten bzw. zweiten Abschnitte aller Stromeinspeiseanordnungen oder nur auf einen Teil hiervon beziehen.

Die konischen Innen- und Außenflächen sind dabei derart angeordnet, dass sie sich durch ein Zusammenstecken bzw. Zusammenschieben des ersten und des zweiten Abschnitts der Stromeinspeiseanordnungen in Kontakt miteinander bringen lassen. Auf diese Weise lässt sich eine elektrische und thermische Kontaktfläche zwischen diesen Elementen effektiv herstellen, ohne eine ggf. fertigungstechnisch aufwendige oder unmögliche stoffschlüssige Verbindung zwischen diesen Elementen herstellen zu müssen. Mit anderen Worten kann eine effektive Stromeinspeisung erfolgen, ohne dass die gesamte Stromeinspeiseanordnung aus dem gleichen Material gefertigt werden muss. Vielmehr lassen sich der erste und der zweite Abschnitt jeweils gezielt an die jeweils geforderten Funktionen anpassen. Beispielsweise kann das Material des ersten Abschnitts explizit im Hinblick auf Temperaturfestigkeit und ausreichende Leitfähigkeit bei entsprechenden Temperaturen ausgewählt werden und das Material des zweiten Abschnitts kann im Hinblick auf eine gute Leitfähigkeit und Anbindbarkeit an weitere Materialien in einem in Bezug auf die dort vorherrschenden Temperaturen weniger kritischen Bereich ausgelegt werden. Die vorteilhaften Effekte der Stromeinspeisung durch entsprechende Stromeinspeiseanordnungen können daher mit geringerem materialtechnischen Aufwand und Fertigungsaufwand erzielt werden und die Strukturen lassen sich an die geforderten Funktionen anpassen.

Ein besonderer Vorteil bei der Verwendung von konischen Kontaktflächen ist, neben den bereits genannten Vorteilen, die Selbstzentrierung des ersten und des zweiten Abschnitts der Stromeinspeiseanordnungen zueinander, so dass, insbesondere dann, wenn eine entsprechende zusammenschiebende Kraft ausgeübt wird, eine funktionsgerechte Anordnung der Elemente und die Montage vereinfacht wird.

In Ausgestaltungen der vorliegenden Erfindung können die konischen Kontaktflächen als Innen- und Außenflächen eines Kegelmantels oder als Innen- und Außenflächen des konischen Mantels eines Kegelstumpfs ausgebildet sein. In allen Fällen kann das terminale Ende des jeweils von dem anderen Abschnitt zumindest teilweise hülsenartig umgebenen Abschnitts vollständig in eine entsprechende Komplementärstruktur des zumindest teilweise hülsenartig umgebenden Abschnitts eingepasst werden, wobei sich bei Verwendung eines Kegelmantels eine maximale Übertragungsfläche ergibt und bei Verwendung eines Kegelstumpfs insbesondere fertigungstechnische Vorteile ergeben können, da die Kegelspitze hierbei nicht vollständig ausgeformt werden muss. Eine ggf. gegenüber Beschädigungen anfällige Spitze ist bei einem Kegelstumpf nicht vorhanden.

Die konischen Kontaktflächen können im Rahmen einer entsprechenden Ausgestaltung der vorliegenden Erfindung einen Konuswinkel von 40 bis 120°, insbesondere beispielsweise ca. 45°oder 60°, einschließen. Unter dem "Konuswinkel" soll dabei der Winkel verstanden werden, den die, bezogen auf die Symmetrieachse, einander gegenüberliegenden Mantellinien des Kegels oder Kegelstumpfs einschließen, den die konischen Kontaktflächen jeweils definieren. Der Konuswinkel entspricht dabei gemäß der hier verwendeten Definition dem Doppelten des Winkels zwischen der Symmetrieachse und jeder Mantellinie. Je kleiner der Konuswinkel ist, also je "spitzer" ein entsprechender Kegel oder Kegelstumpf ausgebildet ist, desto größer ist die Kontaktfläche für den thermischen und den elektrischen Übergang. Bei geringeren Konuswinkeln, also wenn ein Kegel oder Kegelstumpf "stumpfer" ausgebildet ist, ergibt sich eine robustere Ausgestaltung.

In einer besonders bevorzugten Ausgestaltung der vorliegenden Erfindung kann ein elastisch verformbares Vorspannelement bereitgestellt sein, das den zweiten Abschnitt der Stromeinspeiseanordnungen entlang der erwähnten Längsachse in Richtung des ersten Abschnitts drückt. Insbesondere im Zusammenhang mit der erwähnten konischen Ausgestaltung der Kontaktflächen kann auf diese Weise ein dauerhafter und sicherer Kontakt hergestellt werden, da hierdurch ein Kegel oder ein Kegelstumpf permanent in eine entsprechende Komplementärstruktur hineingedrückt werden kann. Auf diese Weise führt auch eine unterschiedliche thermische Ausdehnung des ersten Abschnitts und des zweiten Abschnitts nicht zu einer Trennung der Kontaktflächen voneinander.

Das elastisch verformbare Vorspannelement kann insbesondere als (Schrauben-) Feder ausgebildet sein. Beispielsweise kann dann, wenn der erste Abschnitt der Stromeinspeiseanordnungen zumindest teilweise hülsenartig den zweiten Abschnitt umgibt, ein Lagerring oder eine Lagerschale bereitgestellt sein, die auf den ersten Abschnitt aufgeschraubt wird, und die eine entsprechende Feder abstützt. Die Feder kann direkt auf den zumindest teilweise hülsenartig von dem ersten Abschnitt umgebenen zweiten Abschnitt einwirken oder auf eine entsprechende Gegenstruktur. Im Fall einer Schraubenfeder kann diese insbesondere um den zweiten Abschnitt herum angeordnet sein. Anstelle von Schraubenfedern können beispielsweise auch Wellringe oder dergleichen vorgesehen sein. Die Erfindung ist durch die spezifische Ausgestaltung nicht eingeschränkt.

In einer Alternative zu einer konischen Ausgestaltung der Kontaktflächen können diese auch als Flächen von Gewindegängen ausgebildet sein. Mit anderen Worten kann in dieser Ausgestaltung der vorliegenden Erfindung vorgesehen sein, dass der erste Abschnitt der Stromeinspeiseanordnungen in den zweiten Abschnitt eingeschraubt ist oder umgekehrt. Durch ein entsprechendes Einschrauben kann eine Dehnung des jeweils eingeschraubten Elements bewirkt werden, die auch bei unterschiedlichen thermischen Ausdehnungen eine weitere feste Anordnung der Elemente, und damit der Kontaktflächen zueinander, sicherstellen kann.

In einer besonders bevorzugten Ausgestaltung der vorliegenden Erfindung kann insbesondere der zweite Abschnitt der Stromeinspeiseanordnungen mit oberflächenvergrößernden Elementen versehen und/oder verbunden sein. Diese können beispielsweise in Form von Kühlrippen ausgebildet sein. Auf diese Weise kann eine gezielte Wärmeabfuhr von den zweiten Abschnitten erfolgen.

Falls nicht von vorneherein eine einstückige Ausbildung der ersten Abschnitte der Stromeinspeiseanordnungen und der Rohrstrecken vorgesehen ist, sind die genannten Komponenten in entsprechenden Ausgestaltungen der Erfindung hochtemperaturfest stoffschlüssig verbunden. Der Begriff "hochtemperaturfest stoffschlüssig verbunden" soll eine Verbindungsart bezeichnen, mittels derer zwei oder mehr metallische Teile miteinander stoffschlüssig verbunden sind und die Verbindung bei 500 °C bis 1.500 °C, insbesondere 600 °C bis 1.200 °C oder 800 °C bis 1. 000 °C dauerhaft ist, d.h. sich bei derartigen Temperaturen im regulären Betrieb nicht löst. Eine hochtemperaturfeste stoffschlüssige Verbindung kann insbesondere als Metall-Metall-Verbindung ausgebildet sein, die derart ausgeführt wird, dass kein nichtmetallischer Werkstoff zwischen den verbundenen Teilen verbleibt. Eine solche Verbindung kann insbesondere durch ein Verschweißen, Angießen oder Umgießen hergestellt werden. Es kann sich auch um eine Verbindung handeln, bei der am Übergang der verbundenen Teile kein Gefügeunterschied festzustellen ist und insbesondere um eine Verbindung, bei der kein zusätzliches Metall zur Verbindung verwendet wird.

Die ersten Abschnitte und die zweiten Abschnitte der Stromeinspeiseanordnungen sind, beispielsweise im Gegensatz zu Litzen oder dergleichen, insbesondere einstückig und starr (d.h. insbesondere nicht in Form paralleler oder verflochtener Drähte) ausgebildet. Es handelt sich insbesondere um massive Strukturen, wobei sich aber versteht, dass der den jeweils anderen Abschnitt zumindest teilweise hülsenartig umgebende Abschnitt insbesondere als Hohlstab bzw. rohrförmig ausgebildet ist.

Der erste und der zweite Abschnitt weisen insbesondere eine Längserstreckung entlang der erwähnten Längsachse und senkrecht zu der Wand des Reaktorbehälters auf, die wenigstens doppelt so groß, insbesondere wenigstens dreifach, vierfach oder fünffach und beispielsweise bis zu zehnfach so groß ist wie eine größte Quererstreckung parallel zu der Wand des Reaktorbehälters. Der jeweils von dem anderen Abschnitt zumindest teilweise umgebene Abschnitt kann im Querschnitt beispielsweise rund, oval oder drei- oder mehreckig ausgebildet sein oder eine beliebige andere Form aufweisen. Der den jeweils anderen Abschnitt zumindest teilweise umgebende Abschnitt der Stromeinspeiseanordnungen weist eine Innenform auf, die einer Negativform des davon zumindest teilweise umgebenen Abschnitts entspricht.

Die Stromeinleitung in die Reaktionsrohre bzw. deren zu beheizende Rohrstrecken erfolgt damit erfindungsgemäß über die Stromeinspeiseanordnungen, die beispielsweise in senkrechter Richtung zur lokalen Prozessgasströmung an das prozessführende Reaktionsrohr angebracht sind und sich in dieser Richtung entlang der erwähnten Längsachse erstrecken, d.h. insbesondere am Scheitelpunkt eines Umkehrbogens oder lotrecht zum Rohrverlauf bei ungekrümmten Reaktionsrohren. Bei Letzteren kann die erwähnte Längsachse auch parallel zum Rohrverlauf liegen.

Insbesondere kann dabei ein global abnehmender freier spezifischer Leiterquerschnitt a, der durch den ersten und den zweiten Abschnitt gebildet ist, von außen hin zur Reaktionszone vorliegen. Dies betrifft sowohl den Bereich, in dem der erste Abschnitt den zweiten Abschnitt oder der zweite Abschnitt den ersten Abschnitt zumindest teilweise umgibt, als auch einen Übergangsbereich zum Reaktionsrohr, in dem bevorzugt eine vergrößerte Wandstärke im Vergleich zum Reaktionsrohr fernab der Einspeisung vorgesehen ist.

Der freie spezifische Leiterquerschnitt a (Einheit: $m/\Omega$) ist wie folgt für eine beliebige Querschnittsfläche S definiert, die einen Flächeninhalt A1 (Einheit: Quadratmeter) in einem ersten Abschnitt mit einem mittleren spezifischen elektrischen Widerstand $\rho 1$ (Einheit: $\Omega \times m$) und einen Flächeninhalt A2 in einem zweiten Abschnitt mit einem mittleren spezifischen elektrischen Widerstand $\rho 2$ aufweist:

$$a = A1/\rho 1 + A2/\rho 2$$

Eine besonders vorteilhafte Ausgestaltung der vorliegenden Erfindung umfasst, dass für zwei beliebige, Isoflächen darstellende Querschnittsflächen S1, S2 durch die Stromeinspeiseanordnungen (wobei solche Querschnittsflächen durch den ersten Abschnitt alleine, den zweiten Abschnitt alleine, oder durch den Bereich, in dem der erste Abschnitt den zweiten Abschnitt oder der zweite Abschnitt den ersten Abschnitt zumindest teilweise umgibt, verlaufen können), über die der zeitlich quadratisch gemittelte Wert (rms-Wert) des elektrischen Potentials Vrms,i jeweils konstant ist, und die in unterschiedlichen Distanzen zu der Wechselspannungsquelle, d.h. insbesondere einem Transformator, angeordnet sind, das zeitlich quadratisch gemittelte Potential Vrms,1 der näher am Transformator liegenden Querschnittsfläche S1 stets höher als das zeitlich quadratisch gemittelte Potential Vrms,2 der weiter weg vom Transformator liegenden Querschnittsfläche S2 ist, so dass gilt Vrms,1 > Vrms,2. Die Begriffe "näher" und "ferner" beziehen sich dabei auf kürzere bzw. längere Fließstrecken des elektrischen Stroms von der Stromquelle zu der jeweiligen Querschnittsfläche. Die Verwendung von rms-Werten für die Potentiale bezieht sich auf den Reaktorbetrieb mit Wechselstrom. Im Falle eines Gleichstrombetriebs gelten die beschriebenen Zusammenhänge für arithmetisch gemittelte Werte des elektrischen Potentials.

Die gesamte Stromeinspeisung (d.h. die Stromeinspeiseanordnungen insgesamt) ist ferner vorteilhafterweise derart ausgeführt, dass für die erläuterten zwei beliebigen Querschnittsfläche S1 und S2 in unterschiedlichem Abstand zur Stromquelle und mit Vrms,1 > Vrms,2 der Quotient a2/a1 des freien spezifischen Leiterquerschnitts a2 der weiter entfernt von der Stromquelle liegenden Querschnittsfläche S2 und des freien spezifischen Leiterquerschnitts a1 der näher an der Stromquelle liegenden Querschnittsfläche S1 bei bis zu 0,5, insbesondere bei bis zu 0,9, bis zu 1 bis zu 1,1 oder bis zu 2 liegt. In einer besonders bevorzugten Ausführungsform liegt der Quotient a2/a1 der freien spezifischen Leiterquerschnitte aller beliebigen solcher Flächenpaare bei bis zu 1.

Beispielsweise aus fertigungstechnischen Gründen kann es zu Abweichungen von dieser bevorzugten Ausführung kommen, sodass lokal auch geringe Querschnittszunahmen in Kauf genommen werden können. Für zwei Querschnittsflächen S1* und S2* mit globalen Extremwerten ihrer jeweiligen freien spezifischen Leiterquerschnitte a1* = amax und a2* = amin gilt jedoch vorteilhafterweise stets die Beziehung Vrms,1* > Vrms,2*, d.h. dass die Fläche mit dem höchsten freien spezifischen Leiterquerschnitt näher an der Stromquelle liegt als die Fläche mit dem kleinsten freien spezifischen Leiterquerschnitt.

In der erläuterten Weise kann ein optimalerweise kontinuierlicher Anstieg der Materialtemperatur sichergestellt werden, wobei das Maximum besonders bevorzugt erst in der Reaktionszone erreicht wird. Als Vorgabe bzgl. der Temperaturverteilung kann analog zu den freien spezifischen Leiterquerschnittsverteilungen gemäß einer besonders vorteilhaften Ausgestaltung der vorliegenden Erfindung festgelegt werden, dass für die erläuterten zwei beliebigen Querschnittsflächen S1 und S2 in unterschiedlichem Abstand zur Stromquelle und mit Vrms,1 > Vrms,2 die Temperaturdifferenz T1-T2 der Temperatur T1 der näher an Stromquelle liegenden Querschnittsfläche S1 und der Temperatur T2 der ferner von der Stromquelle liegenden Querschnittsfläche S2 bei bis zu -100 K, insbesondere bis zu -10 K, bis zu -1 K, bis zu 0 K, bis zu 1 K, bis zu 10 K oder bis zu 100 K liegt. In einer besonders bevorzugten Ausführung liegt die Temperaturdifferenz T1-T2 aller solcher Flächenpaare bei weniger als 0 K.

Diese Vorgabe beinhaltet unter anderem die Bedingung, dass im gesamten Bereich der Stromeinspeisung eine maximale lokale Temperaturüberhöhung von -100 K, - 10 K, -1 K, 0 K, 1 K, 10 K oder 100 K gegenüber der maximal auftretenden Materialtemperatur in der angrenzenden Rohrstrecke auftritt.

Die Temperaturdifferenz T1*-T2* der Temperaturen T1* und T2* der Querschnittsflächen S1* und S2* mit den globalen Extremwerten der freien spezifischen Leiterquerschnitte a1*=amax und a2*=amin in den Stromeinspeiseanordnungen beträgt ferner vorteilhafterweise bis zu -500 K, bis zu - 200 K, bis zu -100 K, bis zu 0 K oder bis zu 100 K, d.h. dass die Fläche mit dem höchsten Querschnitt entsprechend dieser Ausgestaltung der Erfindung näher am Transformator liegt und bevorzugt kühler oder höchstens geringfügig heißer ist als die Fläche mit dem kleinsten Querschnitt.

Der freie spezifische Leiterquerschnitt in den Stromeinspeiseanordnungen sinkt in einer Ausgestaltung der vorliegenden Erfindung vorteilhafterweise aus Richtung der Stromeinspeisung in Richtung der Reaktionsrohre überwiegend kontinuierlich bzw. monoton ab. Da bei in dieser Ausgestaltung vorgesehenen Kombination von Materialien der längenspezifische elektrische Widerstand nur von der verfügbaren freien spezifischen Leiterfläche abhängt, steigt auch die spezifisch freigesetzte Energiemenge auf diese Weise stetig an. Damit wird eine möglichst hohe Ausnutzung der zugeführten Energie erreicht, da in den Reaktionsrohren lediglich die vom Prozessgas absorbierte Wärmemenge effektiv nutzbar ist.

Entsprechend einer besonders vorteilhaften Ausgestaltung der vorliegenden Erfindung wird der genaue Verlauf des freien spezifischen Leiterquerschnitts der Stromeinspeiseanordnungen darüber hinaus den lokalen Temperatur- und Wärmeübertragungsbedingungen angepasst. Beispielsweise werden im Bereich von quasi-adiabaten Wanddurchtritten durch die Wand des Reaktorbehälters (in denen keine durch die isolierende Reaktorwand keine nennenswerte Wärmeabstrahlung möglich ist) bevorzugt große freie spezifische Leiterquerschnitte verwendet, die die lokale Wärmedissipation in diesen Bereichen auf ein Minimum reduzieren, sodass die lokale Temperaturüberhöhung nach oben eingegrenzt werden kann. Mit anderen Worten weisen die Stromeinspeiseanordnungen im Bereich des Wanddurchtritts vorteilhafterweise einen größeren freien spezifischen Leiterquerschnitt auf als in wenigstens einem übrigen Bereich.

Wie auch nachfolgend erläutert, sind zur Vermeidung von Kontaktwiderständen zumindest der erste Abschnitt der Stromeinspeiseabschnitt und ein die Rohrstrecken kontaktierender Bereich besonders bevorzugt aus einem einteiligen Bauteil, z.B. in Form eines Standgussteiles, gefertigt. Bei einer mehrteiligen Bauweise, die alternativ ebenfalls möglich ist, wird vorteilhafterweise mittel geeigneter Fügeverfahren (z.B. Reibschweißen) sichergestellt, dass auch im Bereich der Fügeverbindung die erläuterten Vorgaben bzgl. des freien spezifischen Leiterquerschnitts und der maximalen lokalen Temperaturerhöhung eingehalten werden.

Mit besonderem Vorteil weisen die Stromeinspeiseanordnungen jeweils einen freien spezifischen Leitungsquerschnitt auf, der zwischen dem jeweiligen Wanddurchtritt der Stromeinspeiseabschnitte und einem Bereich, in dem die Rohrstrecken elektrisch kontaktiert werden, an keiner Stelle weniger als 500 m/Ω, vorteilhafterweise an keiner Stelle weniger als 1500 m/Ω und insbesondere an keiner Stelle weniger als 2500 m/Ω beträgt. Durch die Verwendung entsprechend hoher freier spezifischer Leitungsquerschnitte kann ein besonders guter Stromübergang ohne Widerstandsverluste sichergestellt werden.

Alternativ zu der wie soeben erläutert Ausgestaltung der freien spezifischen Leiterfläche - bzw. zumindest teilweise gleichbedeutend damit - kann kann im Rahmen der vorliegenden Erfindung auch eine entsprechende Ausgestaltung auf Grundlage des längenspezifischen elektrischen Widerstands vorgesehen sein, wobei dieser sich vom Transformator kommend hin zur Reaktionszone stetig, insbesondere kontinuierlich, erhöht. Der längenspezifische elektrischen Widerstand R/L (Einheit: $\Omega$/m) bestimmt sich aus dem elektrischen Widerstand R, der Einheitslänge L, dem spezifischen elektrischen Widerstand $\rho$ und der freien Leiterquerschnittsfläche A mit

$$R = L \times \rho/A, \text{ so dass } R/L = \rho/A.$$

Mit diesem Ansatz werden sowohl eine sich ändernde Geomerie abgedeckt (z.B. ein variabler Durchmesser der Stromeinspeiseanordnungen) als auch eine Kombination mit einem anderen Material (mit einem ggf. anderen spezifischen elektrischen Widerstand).

Vorteilhafterweise sind die Stromeinspeiseanordnungen jeweils längsbeweglich in ihren Wanddurchtritten durch die Wand des Reaktorbehälters geführt. Eine auf diese Weise sichergestellte Bewegungsfreiheit ist besonders vorteilhaft für das mechanische Verhalten der Reaktionsrohre, das vor allem von der thermischen Dehnung der Rohre um mehrere Dezimeter im Betrieb des Reaktors dominiert wird. Durch die Bewegungsfreiheit wird die Biegebelastung auf die Reaktionsrohre, die bei einer starren Befestigung auftreten würde, reduziert werden. Die Reaktionsrohre können andererseits, wie auch unten noch angesprochen, mit einer starren Sternbrücke versehen sein, so dass auf diese Weise eine stabile Aufhängung auch bei einer entsprechenden Längsbeweglichkeit der Stromeinspeiseanordnungen gegeben ist. Die Stromeinspeiseanordnungen stellen aufgrund ihrer vorteilhaften Dimensionierung mit ausreichend hohem Gesamtquerschnitt eine sichere seitliche Führung der Reaktionsrohre sicher.

Da die in dem erfindungsgemäßen Reaktor durchgeführten Reaktionen hohe Temperaturen erfordern, muss die elektrische Verbindung in dem Stromeinspeisebereich in einem Hochtemperaturbereich von beispielsweise ca. 900 °C für das Steamcracken realisiert werden. Dies ist durch die erfindungsgemäß vorgeschlagenen Maßnahmen durch die Wahl geeigneter Materialien und deren ausreichende Dimensionierung möglich. Die Verbindung soll gleichzeitig eine hohe elektrische Leitfähigkeit und eine hohe mechanische Stabilität und Zuverlässigkeit bei hohen Temperaturen aufweisen. Ein Versagen der elektrischen Verbindung führt zu asymmetrischen Potentialen am Sternpunkt und in der Folge zur sofortigen sicherheitsbedingten Abschaltung der Anlage aufgrund einer unerwünschten Stromführung von Anlagenteilen. Die vorliegende Erfindung führt durch die Vermeidung derartiger Situationen zu Vorteilen gegenüber dem Stand der Technik.

Die erfindungsgemäß vorgesehene Kontaktierung der Rohrstrecken innerhalb des Reaktorbehälters gegenüber einer theoretisch ebenfalls möglichen Kontaktierung außerhalb des Reaktorbehälters, für die die Reaktionsrohre aus dem Reaktorbehälter geführt werden müssten, hat den Vorteil einer klarer definierten Strecke des elektrischen Wärmeeintrags, weil hierbei keine elektrisch beheizte Rohrabschnitte von dem wärmeren Innenraum zu dem kälteren Außenraum geführt werden müssen. Durch die erfindungsgemäße Kontaktierung sind aufgrund der vollständig innerhalb des Reaktorbehälters angeordneten Rohrstrecken räumlich sehr homogene äußere thermische Randbedingungen der elektrisch beheizten Rohrstrecken erzielbar. Hieraus ergeben sich prozesstechnische Vorteile, beispielsweise kann eine zu erwartende übermäßige lokale Koksbildung in beheizten und nach außen thermisch isolierten Durchtritten vermieden werden.

Außerhalb des Reaktorbehälters oder in einer außerhalb des eigentlichen Reaktorbehälters angeordneten, insbesondere gekühlten Anschlusskammer können die Stromeinspeiseanordnungen beispielsweise elektrisch mittels Anschlusselementen wie Stromschienen und Anschlussbändern an ein Transformatorsystem angebunden sein. Die Anschlussbänder und Stromschienen können dabei aus einem anderen Material als die ersten oder zweiten Abschnitte der Stromeinspeiseanordnungen gefertigt sein. Diese Anschlusselemente können, da außerhalb des Reaktorbehälters geringere Temperaturen vorliegen, insbesondere flexibel ausgebildet sein. Schaltvorrichtungen können insbesondere auf einer Primärseite des Transformatorsystems installiert sein, weil dort eine höhere Spannung und ein niedrigerer Strom vorliegen.

Im Rahmen der vorliegenden Erfindung können erste Abschnitte der Stromeinspeiseanordnungen und die Rohrstrecken aus dem gleichen Material oder aus Materialien gebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können die genannten Komponenten auch aus Stählen derselben Stahlklasse ausgebildet sein. Die Verwendung gleicher oder nahe verwandter Materialien kann dabei das Angießen oder Verschweißen erleichtern.

Andererseits können durch den Einsatz der vorliegenden Erfindung für die zweiten Abschnitte andere Materialien gewählt werden, die beispielsweise eine einfachere Bearbeitbarkeit sicherstellen, und die beispielsweise in einfacherer Weise mit Dehnungselementen zur Stromeinspeisung verbunden werden können. Das ausschlaggebende Kriterium für die Auswahl des Werkstoffs für den zweiten Abschnitt ist ein niedriger spezifischer elektrischer Widerstand, bei möglichst hoher Temperaturverträglichkeit. Allgemein kann ein Werkstoff aus einem Einzelmetall aus der Gruppe Molybdän (Mo), Wolfram (Wo), Tantal (Ta), Niob (Nb), Nickel (Ni) und Chrom (Cr) oder eine Metalllegierung zum Einsatz kommen, die massenanteilig mindestens 50% zumindest eines Werkstoffs aus der Gruppe Mo, Wo, Ta, Nb und Cr aufweist. Auch Komponenten wie Zirkon (Zr), Kohlenstoff (C) in Form von Carbiden und/oder seltene Erden wie Hafnium (Hf), Lanthan (La) können enthalten sein.

Eine Übersicht kommerziell verfügbarer Werkstoffe entsprechender Zusammensetzung für möglichen Einsatz im zweiten Abschnitt kann von entsprechenden Herstellern bezogen werden. Nachfolgend wird ohne Anspruch auf Vollständigkeit eine Auswahl entsprechender Werkstoffe genannt.

Als Werkstoffe auf Molybdän-Basis können beispielsweise reines oder im Wesentlichen reines Molybdän oder bekannte Legierungen mit den Materialbezeichnungen TZM, MHC, ML, MLR, MLS, MoILQ, MY, MoRe5, MoRe41, MW20, MW30, MW50, MoCu30, MoCu15, MZ17, MoNb10 oder MT11 zum Einsatz kommen. Werkstoffe auf Wolfram-Basis umfassen beispielsweise reines oder im Wesentlichen reines Wolfram und bekannte Legierungen mit den Materialbezeichnungen WK65, WVM, WVMW, S-WVMW, WC, WL, WL-S, WLZ, WRe, WCu und hochdichte Wolfram-Schwermetall-Legierungen. Als Tantal-Werkstoffe können beispielsweise reines oder im Wesentlichen reines Tantal in Sinter- oder Gussqualität, insbesondere bekannte Materialien wie TaS, TaK, TaKS, Ta2.5W oder Ta10W verwendet werden. Neben reinem oder im Wesentlichen reinem Chrom kann auch beispielsweise die Legierung CFY zum Einsatz kommen.

In einer bevorzugten Ausführungsform weisen die ersten Abschnitte der Stromeinspeiseanordnungen und die Rohrstrecken jeweils eine hitzebeständige Chrom-Nickel-Stahllegierung mit hoher Oxidations- bzw. Zunderbeständigkeit und hoher Aufkohlungsbeständigkeit auf oder sind aus einer solchen gebildet.

Beispielsweise kann es sich um ein eisenhaltiges Material mit 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten handeln, wobei die Gehalte sich jeweils zu dem Nichteisenanteil ergänzen.

Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden. Diese haben sich für den Hochtemperatureinsatz als besonders geeignet erwiesen.

In sämtlichen zuvor erläuterten Fällen können die ersten Abschnitte der Stromeinspeiseanordnungen und die Rohrstrecken aus demselben Material oder aus Materialien ausgebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können das Verbindungselement und die Rohrstrecken auch aus Stählen derselben Stahlklasse ausgebildet sein. Die Verwendung gleicher oder nahe verwandter Materialien kann dabei die einstückige Ausbildung der ersten Abschnitte und der Rohrstrecken, beispielsweise durch Angießen oder Verschweißen, erleichtern.

Wie erwähnt, können sämtliche Rohrstrecken innerhalb des Reaktorbehälters bei Beheizung mittels mehrphasigem Wechselstrom mittels eines starren Verbindungselements ("Sternbrücke") elektrisch leitend miteinander verbunden sein, oder diese Verbindung kann gruppenweise mittels mehrerer starrer Verbindungselemente erfolgen.

Durch eine entsprechende Realisierung einer Sternschaltung in Kombination mit der erläuterten Stromeinspeisung über längsgeführte Stromeinspeiseanordnungen wird insgesamt eine Konstruktion geschaffen, die eine effiziente Bestromung bei gleichzeitiger stabiler Befestigung, die den vor allem aus den hohen Wärmedehnungsraten resultierenden Spannungen standhält, ermöglicht.

Dies gilt auch für die erfindungsgemäß ebenfalls mögliche Beheizung mittels Gleichstrom oder einphasigem Wechselstrom, wobei in diesem Fall, wie erwähnt, kein Sternpunkt im Reaktor vorhanden ist. Gleichwohl kann an dem der Stromeinspeisung entgegengesetzten Ende auch hier eine starre Anordnung vorgesehen sein, da sich die Reaktionsrohre aufgrund der erfindungsgemäß vorgesehenen Stromeinspeiseanordnungen ohne die Erzeugung von Spannungen im Wesentlichen frei ausdehnen können. An dem der Stromeinspeisung entgegengesetzten Ende der Reaktionsrohre kann also eine starre Anordnung vorgesehen sein, ggf. können aber auch hier Elemente bereitgestellt sein, die den erfindungsgemäßen Stromeinspeiseanordnungen entsprechen. In jedem Fall kann jedoch auf eine bewegliche Anordnung verzichtet werden.

Die vorliegende Erfindung wird nachfolgend zunächst unter Bezugnahme auf Reaktionsrohre und Reaktoren beschrieben, wie sie zum Steamcracken zum Einsatz kommen. Wie danach erläutert, kann die Erfindung aber auch in anderen Reaktortypen zum Einsatz kommen, wie sie danach angesprochen werden. Generell kann, wie erwähnt, der erfindungsgemäß vorgeschlagene Reaktor zur Durchführung aller endothermen chemischen Reaktionen verwendet werden.

Reaktionsrohre, wie sie typischerweise zum Steamcracken verwendet werden, weisen typischerweise wenigstens einen Umkehrbogen auf. Ein erfindungsgemäß eingesetzter Reaktor kann also insbesondere als Reaktor zum Steamcracken ausgebildet sein, und zwar insbesondere durch die Wahl entsprechen temperaturfester Materialien und die geometrische Ausgestaltung der Reaktionsrohre.

Beispielsweise kann es sich bei den in diesem Zusammenhang verwendeten Reaktionsrohren um sogenannte 2-Passagen-Coils handeln. Diese weisen zwei Rohrstrecken im Reaktorbehälter auf, die über (genau) einen Umkehrbogen ineinander übergehen und daher grundsätzlich die Form eines (verlängerten) U aufweisen. Die in den Reaktorbehälter ein- und aus diesem austretenden Abschnitte gehen in derartigen Anordnungen insbesondere nahtlos oder ohne strömungstechnisch relevanten Übergang in die beheizten Rohrstrecken über.

Der Reaktor kann also in dieser Ausgestaltung derart ausgebildet sein, dass die Rohrstrecken jeweils zwei Rohrstrecken mehrerer Reaktionsrohre umfassen, die zumindest zum Teil nebeneinander in dem Reaktorbehälter angeordnet sind, wobei die jeweils zwei Rohrstrecken der mehreren Reaktionsrohre in dem Stromeinspeisebereich über jeweils einen Umkehrbogen ineinander übergehen.

Die Stromeinspeiseanordnungen können in diesem Fall an die Umkehrbögen angebunden sein. Da mehrere Reaktionsrohre mit Umkehrbögen vorhanden sind, können bei entsprechender Anzahl auch jeweils mehrere Umkehrbögen in den jeweiligen Stromeinspeiseanordnungen bereitgestellt sein und auf diese Weise an einen Stromanschluss angeschlossen sein. Auf diese Weise kann die mechanische Befestigung verbessert und die Bauteilzahl reduziert werden. Es ist alternativ dazu aber auch möglich, und zwar auch bei Bestromung mehrerer Umkehrbögen über einen Stromanschluss, jeweils eine Stromeinspeiseanordnung pro Umkehrbogen bereitzustellen, beispielsweise um eine individuelle Längsbeweglichkeit der Stromeinspeiseanordnungen bei ggf. unterschiedlicher thermischer Ausdehnung der Rohrstrecken sicherzustellen.

Die soeben erläuterte Ausgestaltung der Erfindung kann auch auf Fälle übertragen werden, in denen verzweigte Reaktionsrohre verwendet werden, d.h. in denen eingespeistes Fluid aus einem Rohrabschnitt auf zwei oder mehr Rohrabschnitte verteilt wird, oder in denen Fluid aus zwei oder mehr Rohrabschnitten in einem Rohrabschnitt zusammengefasst wird. Auch hier können also jeweils zwei Rohrstrecken mehrerer Reaktionsrohre, die zumindest zum Teil nebeneinander in dem Reaktorbehälter angeordnet sind, in der erläuterten Weise über eine erfindungsgemäße Stromeinspeiseanordnung bestromt werden.

Neben der zuvor unter Bezugnahme auf 2-Passagen-Coils beschriebenen Ausgestaltung kann aber auch eine Ausgestaltung zum Einsatz kommen, die sich zur Verwendung mit sogenannten 4-Passagen-Coils eignet. Diese weisen vier im Wesentlichen gerade verlaufende Rohrstrecken auf. Auch Anordnungen mit einer höheren, geraden Anzahl an gerade verlaufenden Rohrstrecken sind jedoch möglich. Auch werden aber jeweils zwei Rohrstrecken mehrerer Reaktionsrohre, die zumindest zum Teil nebeneinander in dem Reaktorbehälter angeordnet sind, in der erläuterten Weise über eine erfindungsgemäße Stromeinspeiseanordnung bestromt.

Unter einem "Umkehrbogen" wird hier insbesondere ein Rohrabschnitt oder Rohrbauteil verstanden, der oder das einen teilkreis- oder teilelliptischen, insbesondere halbkreis- oder halbelliptischen Rohrbogen umfasst. Beginn und Ende weisen insbesondere in einer Ebene nebeneinander liegende Schnittflächen auf.

Jeder der Umkehrbögen, sofern er in dem Stromeinspeisebereich innerhalb des Reaktorbehälters liegt und entsprechend bestromt werden soll, kann in Form einer Passage in dem ersten Abschnitt einer erfindungsgemäßen Stromeinspeiseanordnung ausgebildet sein oder einen Teil einer solchen darstellen.

Reaktionsrohre, wie sie typischerweise zur Dampfreformierung verwendet werden, weisen typischerweise keine Umkehrbögen innerhalb des Reaktorbehälters auf. In diesem Fall umfassen die Rohrstrecken aber jeweils eine Rohrstrecke von mehreren Reaktionsrohren, wobei die Rohrstrecken innerhalb des Reaktorbehälters fluidisch unverbunden und zumindest zum Teil nebeneinander angeordnet sind. Die Reaktionsrohre können zur Dampfreformierung insbesondere auch mit einem geeigneten Katalysator ausgestattet werden.

In dieser Ausgestaltung stellen die Kontaktpassagen in einer erfindungsgemäßen Stromeinspeiseanordnung gerade Rohrabschnitte bzw. Kanäle dar. Die Stromeinspeiseanordnungen können einen Bereich aufweisen, der manschettenartig an die Reaktionsrohre angefügt oder einstückig damit ausgebildet ist.

In allen Fällen kann durch die Ausbildung der Stromeinspeiseanordnungen sowie optional auch der Rohrstrecken aus so wenigen Einzelteilen wie möglich die Anzahl der Metall-Metall-Verbindungen (z.B. Schweiß- oder Lötverbindungen) reduziert oder sogar komplett auf diese verzichtet werden. Dadurch können die mechanische Stabilität sowie die Zuverlässigkeit erhöht werden. In einer besonders vorteilhaften Ausführung können die Stromeinspeiseanordnungen und die Rohrstrecken jeweils als ein einziges Gussteil umgesetzt werden, oder es können, wie erwähnt, Teile der prozessführenden Rohrleitungen umgossen werden und/oder Teile der prozessführenden können Rohrleitungen können als ein integraler Bestandteil eines entsprechenden Gussstücks ausgebildet sein.

Metall-Metall-Verbindungen oder Metallübergänge, die im Rahmen der vorliegenden Erfindung reduziert werden können, könnten zu einer lokalen elektrischen Widerstandsänderung, und deswegen zu Hot Spots führen. Hot Spots wiederum führen zu einer Reduzierung der Lebenszeit durch erhöhte lokale Temperaturen oder zu mechanischen Spannungsspitzen durch hohe lokale Temperaturgradienten. Dies wird im Rahmen der vorliegenden Erfindung vermieden.

Eine einteilige Ausbildung so vieler Komponenten wie möglich bringt mechanische Stabilität, Zuverlässigkeit und eine Reduktion der Einzelbauteile. Eine hohe mechanische Stabilität ist erstrebenswert, da ein Versagen wie erwähnt zu sicherheitskritischen Situationen führen kann. Durch die beschriebene Ausführung im Sinne der vorliegenden Erfindung kann das Prinzip der mit mehrphasigem Wechselstrom widerstandbeheizten Reaktionsrohre technisch im Hochtemperaturbereich, d.h. insbesondere bei mehr als 500 °C, mehr als 600 °C, mehr als 700 °C oder mehr als 800 °C, realisiert werden.

Zu dem erfindungsgemäß vorgeschlagenen Verfahren, bei dem ein Reaktor verwendet wird, wie er zuvor in unterschiedlichen Ausgestaltungen erläutert wurde, sei auf den entsprechenden unabhängigen Patentanspruch ausdrücklich verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.

Figurenbeschreibung

Figur 1 veranschaulicht schematisch einen Reaktor zur Durchführung einer chemischen Reaktion gemäß einer nicht erfindungsgemäßen Ausgestaltung.

Figur 2 veranschaulicht schematisch einen Reaktor zur Durchführung einer chemischen Reaktion gemäß einer Ausgestaltung der Erfindung.

Figur 3 veranschaulicht schematisch einen Reaktor zur Durchführung einer chemischen Reaktion gemäß einer weiteren Ausgestaltung der Erfindung.

Figur 4 veranschaulicht schematisch einen Reaktor mit einer Stromeinspeiseanordnung gemäß einer Ausgestaltung der Erfindung.

Figur 5 veranschaulicht einen Stromeinspeisebereich eines Reaktors gemäß einer Ausgestaltung der Erfindung.

Figuren 6A und 6B veranschaulichen Reaktionsrohre und entsprechende Anordnungen zur Verwendung in einem Reaktor gemäß einer Ausgestaltung der Erfindung.

Figuren 7A bis 7C veranschaulichen Rohranordnungen zur Verwendung in einem Reaktor gemäß einer Ausgestaltung der Erfindung.

Figuren 8A und 8B veranschaulichen Rohranordnungen zur Verwendung in einem Reaktor gemäß einer Ausgestaltung der Erfindung.

Figuren 9A bis 9C veranschaulichen weitere Rohranordnungen zur Verwendung in einem Reaktor gemäß einer Ausgestaltung der Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug. Wie erwähnt, eignet sich die vorliegende Erfindung aber in gleicher Weise auch zur Verwendung von Gleichstrom zur Beheizung. Auf die obigen Erläuterungen wird dabei verwiesen.

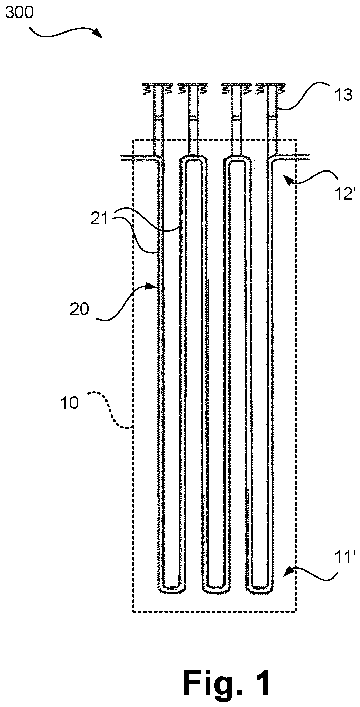

Figur 1 veranschaulicht schematisch einen Reaktor zur Durchführung einer chemischen Reaktion gemäß einer nicht erfindungsgemäßen Ausgestaltung.

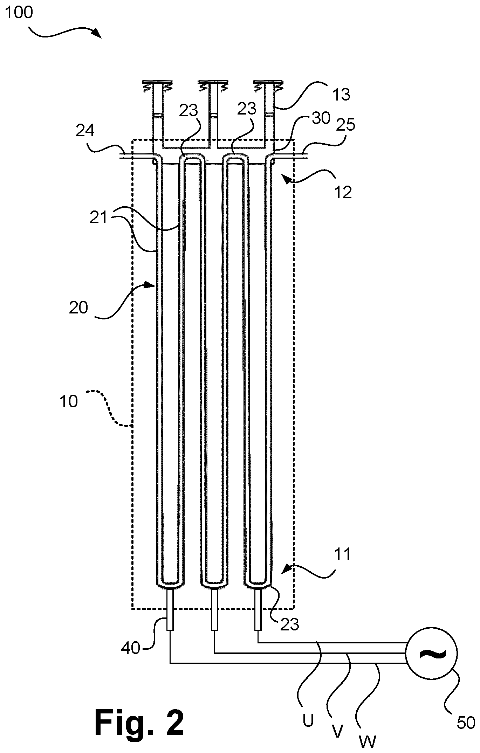

Der hier mit 300 bezeichnete Reaktor ist zur Durchführung einer chemischen Reaktion eingerichtet. Er weist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 dargestellt, wobei die Rohrstrecken 21 zur Beheizung der Rohrstrecken 21 in den Stromeinspeisebereichen 11 jeweils elektrisch mit den Phasenanschlüssen U, V, W einer mehrphasigen Wechselstromquelle 50 verbindbar sind. Schalter und dergleichen sowie die spezifische Art der Anbindung sind nicht veranschaulicht.

Die Rohrstrecken 21 sind in der hier veranschaulichten Ausgestaltung der Erfindung in den Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. Daran kann auch ein Neutralleiter angebunden sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können) nebeneinander in dem Reaktorbehälter 10 angeordnet. Zwei Rohrstrecken 21 gehen jeweils über Umkehrbögen 23 (nur teilweise bezeichnet) ineinander über und sind mit einem Einspeiseabschnitt 24 und einem Entnahmeabschnitt 25 für ein Arbeitsfluid verbunden.

Eine erste Gruppe der Umkehrbögen 23 (in der Zeichnung unten) ist nebeneinander in dem Bereich 11 und eine zweite Gruppe der Umkehrbögen 23 (in der Zeichnung oben) ist nebeneinander in dem Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem Bereich 12 zu dem Bereich 11. Diese spezifische Anordnung ist nicht zwingend.

Die Verwendung des Verbindungselements 30 ist im Rahmen der vorliegenden Erfindung optional, wenngleich vorteilhaft. Ausgestaltungen der Erfindung, die nachfolgend erläutert sind, betreffen dagegen insbesondere die Ausgestaltung der Mittel zur Stromeinspeisung in dem daher als Stromeinspeisebereich bezeichneten Bereich 11. Diese erfolgt durch die Verwendung von Stromeinspeiseanordnungen 40, die hier stark vereinfacht veranschaulicht sind und von denen nur eines bezeichnet ist.

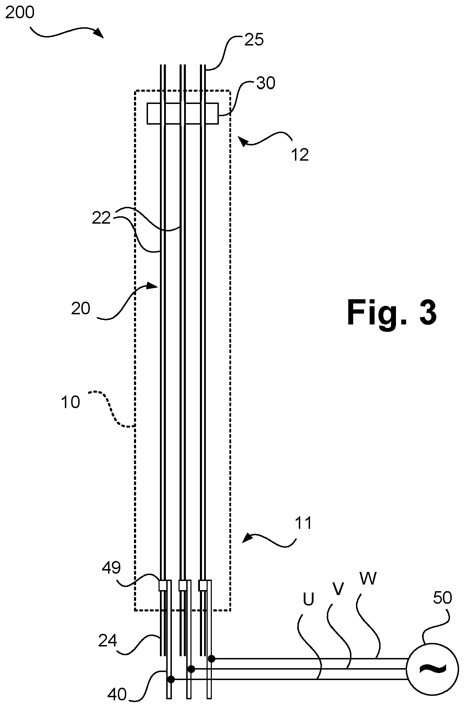

Figur 3 veranschaulicht schematisch einen Reaktor zur Durchführung einer chemischen Reaktion gemäß Ausgestaltung der vorliegenden Erfindung, der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 für Arbeitsfluid verbunden sind. Zu den übrigen Elementen sei auf die obigen Erläuterungen zu den voranstehenden Figuren ausdrücklich verwiesen.

Wiederum ist die Verwendung eines Verbindungselements 30 im Rahmen der vorliegenden Erfindung optional, wenngleich vorteilhaft. Auch hier sind Stromeinspeiseanordnungen 40 stark vereinfacht veranschaulicht. Diese können einen manschettenartigen Bereich 49 aufweisen, der in dem Bereich 11 um die Reaktionsrohre 20 bzw. die Rohrstrecken gelegt sind.

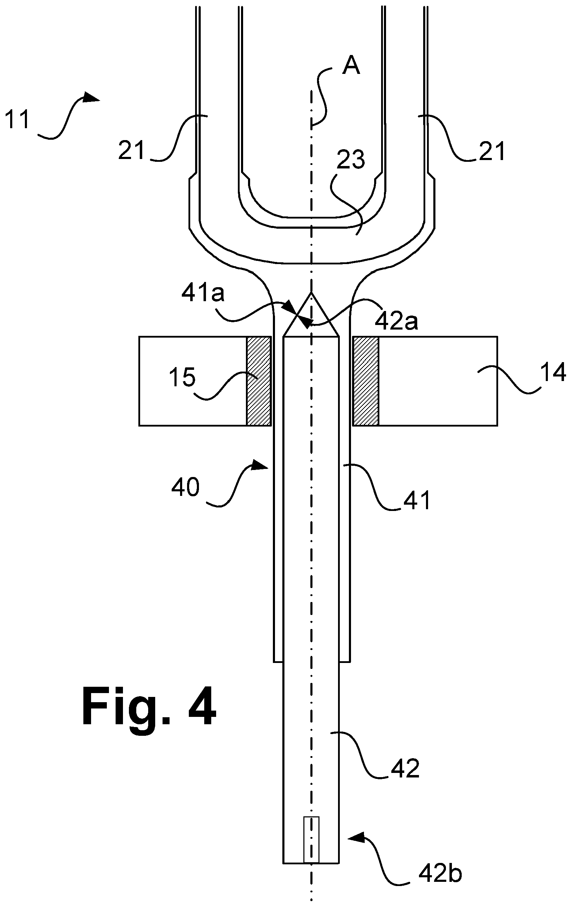

Figur 4 zeigt eine Ausschnittsdarstellung des Bereichs 11 eines Reaktors 100, beispielsweise gemäß Figur 2, mit einer in dem Bereich 11 angeordneten Stromeinspeiseanordnung 40 und einem daran angebundenen Reaktionsrohr 20, dessen hier abschnittsweise veranschaulichten Rohrstrecken 21 hier über einen Umkehrbogen 23 ineinander übergehen.

Der Umkehrbogen 23 ist hier mit einer verstärkten Wandung ausgebildet, die sich an die zwei Rohrstrecken 21 in dem Bereich 11 anschließt. Eine Wand des Umkehrbogens 23 ist dabei mit einem ersten Abschnitt 41 einer bereits zuvor schematisch veranschaulichten Stromeinspeiseanordnung 40 verbunden oder einstückig damit ausgebildet.

Die Stromeinspeiseanordnungen 40 weisen jeweils den ersten Abschnitt 41 und einen zweiten Abschnitt 42 auf, wobei der erste Abschnitt 41 sich hier ausgehend von den beiden Rohrstrecken 21 bzw. dem Umkehrbogen 23 entlang einer Längsachse A erstreckt. Der erste Abschnitt 41 umgibt den zweiten Abschnitt 42 jeweils in einem Bereich der Stromeinspeiseanordnungen 40 hülsenartig, und der erste Abschnitt 41 und der zweite Abschnitt 42 weisen schräg zu der Längsachse A angeordnete Kontaktflächen 41a, 42a zur Kontaktierung miteinander auf.

Die konisch ausgebildeten Kontaktflächen 41a, 42a des ersten Abschnitts 41 und des zweiten Abschnitts 42 der Stromeinspeiseanordnungen 40 sind jeweils als konische Innen- und Außenflächen ausgebildet, die sich durch ein oder Zusammenschieben des ersten Abschnitts 41 und des zweiten Abschnitts 42 der Stromeinspeiseanordnungen 40 in Kontakt miteinander bringen lassen. Genauer sind im dargestellten Beispiel die konischen Kontaktflächen 41a, 42a als Innen- und Außenflächen eines Kegelmantels mit einem Konuswinkel von 60°ausgebildet.

Die Stromeinspeiseanordnungen 40 verlaufen jeweils an einem Wanddurchtritt 15 durch eine Wand 14 des Reaktorbehälters 10 und sind hier längsbeweglich aufgenommen. Der Wanddurchtritt 15 ist hier übertrieben breit dargestellt und beispielsweise mit einem schraffiert dargestellten Isoliermaterial ausgekleidet.

An der Außenseite der Wand 14 des Reaktorbehälters 10 kann optional, aber für die vorliegende Erfindung keinesfalls wesentlich, eine nicht veranschaulichte Balgenanordnung bereitgestellt sein, die eine gasdichte Abdichtung des Reaktorbehälters 10 gegenüber der Umgebung trotz der Längsbeweglichkeit der stabförmigen Stromeinspeiseanordnungen 40 sicherstellt.

An einem Ende 42b des zweiten Abschnitts 42 können Stromschienen oder Litzen zum Anschluss der zuvor veranschaulichten Phase U,V,W bzw. von entsprechenden Stromanschlüssen einer Gleichstromquelle oder einer einphasigen Wechselstromquelle angebracht sein.

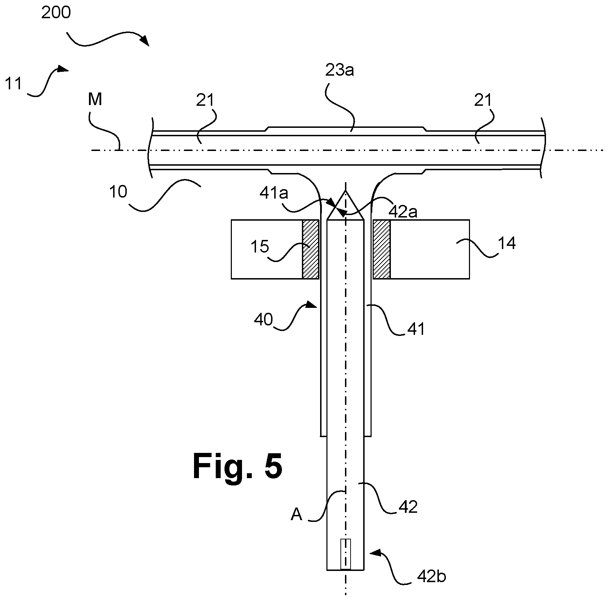

Figur 5 zeigt eine Ausschnittsdarstellung des Stromeinspeisebereichs 11 eines Reaktors 200, wobei die jeweils gezeigten Elemente bereits im Zusammenhang mit Figur 4 erläutert wurden. Im Unterschied zu Figur 4 weist das Reaktionsrohr 20 allerdings hier keinen Umkehrbogen auf und die Rohrstrecken 21 sind entlang einer gemeinsamen Mittelachse M angeordnet. Ein ungekrümmter Übergangsbereich ist mit 23a bezeichnet. Eine entsprechende Ausgestaltung kann beispielsweise anstelle einer Manschette in dem Reaktor 200 gemäß Figur 3 zum Einsatz kommen. Der Übergangsbereich 23a ist auch hier mit einer verstärkten Wandung ausgebildet, an die sich der erste Abschnitt 41 der Stromeinspeiseanordnung 11 anschließt. Zu weiteren Erläuterungen wird auf Figur 4 verwiesen.

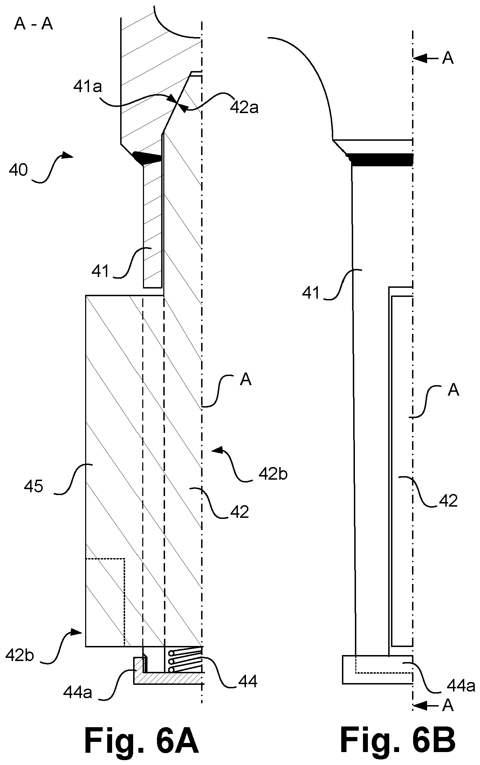

Die Figuren 6A und 6B zeigen einen Längsschnitt durch eine Stromeinspeiseanordnung 40 gemäß einer Ausgestaltung der Erfindung entlang zweier, senkrecht aufeinander stehender Schnittflächen.

Wie aus Figur 6A ersichtlich, ist ein elastisch verformbares Vorspannelement 44 in Form einer Feder bereitgestellt, das den zweiten Abschnitt 42 der Stromeinspeiseanordnungen 40 entlang der Längsachse A in Richtung des ersten Abschnitts 41 drückt und in einer Schale 44a gelagert ist. Ferner ist der zweite Abschnitt 42 der Stromeinspeiseanordnungen 40 mit oberflächenvergrößernden Elementen 45 in Form von Kühlrippen versehen.

Bei Crackeröfen können neben den zuvor in den Figuren 1 und 2 gezeigten Reaktionsrohren 20, die üblicherweise als 6-Passagen-Coils bezeichnet werden, und die sechs gerade Rohrstrecken 21 mit insgesamt fünf 180°-Krümmern aufweisen, auch Varianten mit weniger Passagen verwendet werden.

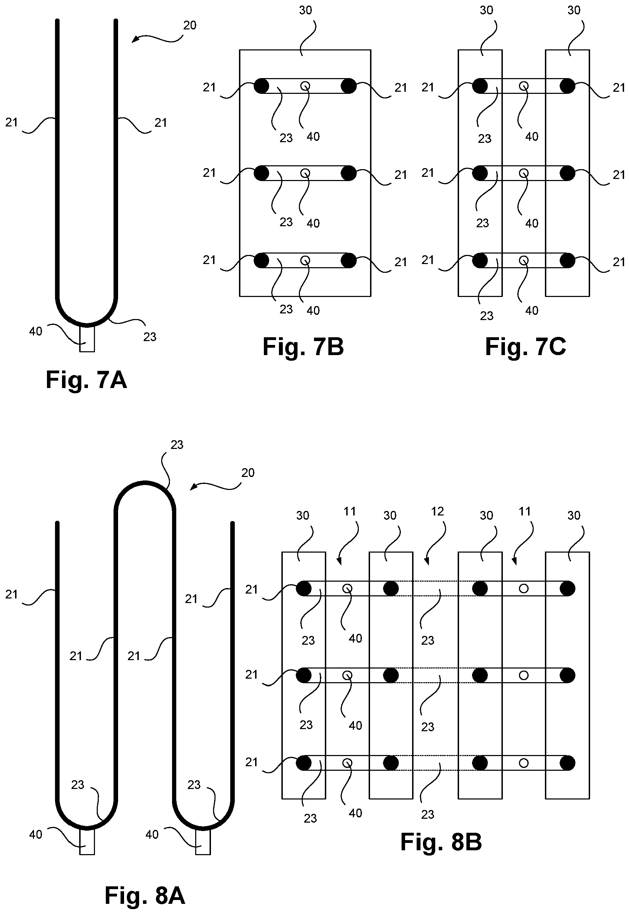

Zum Beispiel weisen sogenannte 2-Passagen-Coils nur zwei gerade Rohrstrecken 21 und nur einen 180°-Krümmer bzw. Umkehrbogen 23 auf. Dies ist in den Figuren 7A bis 7C veranschaulicht. Die Stromeinspeisung kann jeweils an einer Stelle pro Reaktionsrohr 21 am unteren (bzw. einzigen) Umkehrbogen stattfinden. Die Stromeinspeiseanordnungen sind mit 40 angedeutet. Jeweils M Reaktionsrohre können elektrisch miteinander gekoppelt sein, mit einer Phasenverschiebung um 360°/M und mit einem gemeinsamen Verbindungselement 30. Dabei kann in einer ersten Alternative pro Coil-Paket bzw. für alle jeweils betrachteten Reaktionsrohre 20 ein besonders großes Verbindungselement 30 verwendet werden. In einer zweiten Alternative ist aber auch der Einsatz von zwei kleiner dimensionierten Verbindungselementen 30 möglich.

Die soeben erläuterte erste Alternative ist in Figur 7B, die soeben erläuterte zweite Alternative in Figur 7C in einer Querschnittsansicht durch die Rohrstrecken 21 veranschaulicht, wobei ein entsprechendes Reaktionsrohr 20 in einer Ansicht senkrecht zu den Ansichten der Figuren 7B und 7C in Figur 7A dargestellt ist. Zur Bezeichnung der entsprechenden Elemente sei auf die Figur 1 verwiesen. Es versteht sich, dass das oder die Verbindungselemente 30 mit den dort ggf. angeordneten Umkehrbögen 23 einerseits und die anderen Umkehrbögen 23 andererseits mit den Anschlüssen an die Phasen U, V, W über die Stromeinspeiseanordnungen 40 (hier stark vereinfacht gezeigt) in unterschiedlichen Ebenen, entsprechend dem ersten und dem Bereich 11, 12 eines Reaktors, angeordnet sind. Wiederum sei betont, dass Vorhandensein und Anordnung der Verbindungselemente 30 im Rahmen der vorliegenden Erfindung rein optional bzw. beliebig ist.

Entsprechend kann dieses Konzept auch auf Coils bzw. Reaktionsrohre 20 mit vier Passagen bzw. Rohrstrecken 21 (sogenannte 4-Passagen-Coils) angewandt werden, in diesem Fall mit einer, zwei oder vier Sternbrücken bzw. Verbindungselementen 30. Ein entsprechendes Beispiel ist in den Figuren 8A und 8B dargestellt, wobei in Figur 8B vier Verbindungselemente 30 dargestellt sind. Zur besseren Veranschaulichung sind die Umkehrbögen 23 hier gestrichelt (Umkehrbögen in dem Bereich 12) und ungestrichelt (Umkehrbögen in dem Bereich 11) dargestellt. Die Elemente sind der Übersichtlichkeit halber nur teilweise mit Bezugszeichen versehen.

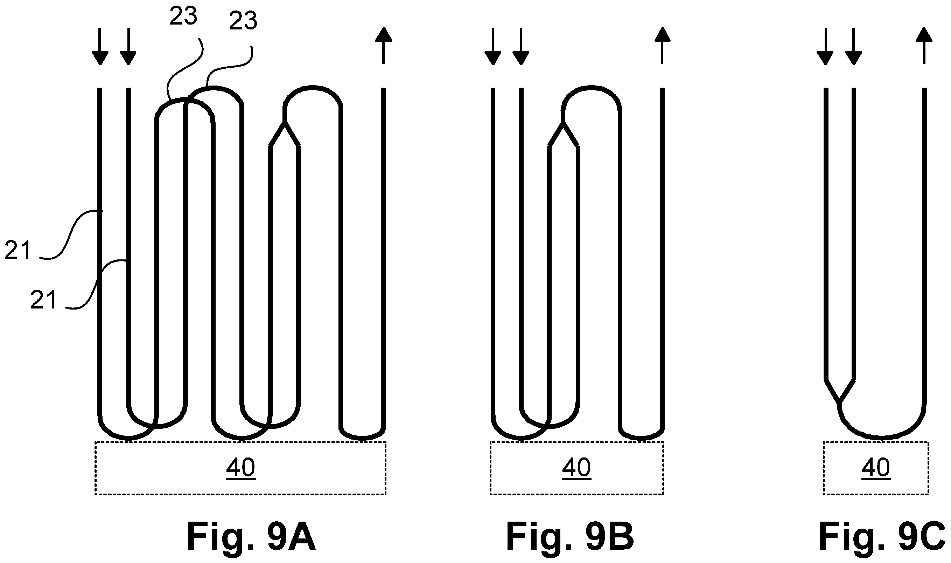

Die Figuren 9A bis 9C zeigen weitere Reaktionsrohre zur Verwendung in einem Reaktor gemäß einer Ausgestaltung der Erfindung. Die Reaktionsrohre und Rohrabschnitte sind hier nur jeweils teilweise mit Bezugszeichen versehen. Einspeise- und Entnahmeabschnitte ergeben sich durch die dargestellten Flusspfeile. Die Stromeinspeiseanordnungen 40, die mehrfach vorhanden und in der zuvor erläuterten Weise ausgebildet sein können, sind stark vereinfacht gestrichelt angedeutet.

**Patentansprüche**

1. Reaktor (100, 200) zur Durchführung einer chemischen Reaktion, der einen Reaktorbehälter (10) und ein oder mehrere Reaktionsrohre (20) aufweist, wobei eine Anzahl von Rohrstrecken (21, 22) des einen oder der mehreren Reaktionsrohre (20) innerhalb des Reaktorbehälters verläuft und wobei die Rohrstrecken (21, 22) in einem Stromeinspeisebereich (11) zur elektrischen Beheizung der Rohrstrecken jeweils elektrisch mit einem oder mehreren Stromanschlüssen verbunden oder verbindbar sind, **dadurch gekennzeichnet, dass** in dem Stromeinspeisebereich (11) Stromeinspeiseanordnungen (40) angeordnet sind, an die jeweils eine der Rohrstrecken (21, 22) oder jeweils eine Gruppe der Rohrstrecken (21, 22) elektrisch angebunden ist, wobei die Stromeinspeiseanordnungen (40) jeweils einen ersten Abschnitt (41) und einen zweiten Abschnitt (42) aufweisen, wobei der erste Abschnitt (41) sich ausgehend von der jeweiligen Rohrstrecke (21, 22) oder der jeweiligen Gruppe von Rohrstrecken (21, 22) oder einem hiermit verbundenen Element entlang einer Längsachse (A) erstreckt, der erste Abschnitt (41) den zweiten Abschnitt (42) oder der zweite Abschnitt (42) den ersten Abschnitt (41) jeweils in einem Bereich der Stromeinspeiseanordnungen (40) zumindest teilweise hülsenartig umgibt, der erste Abschnitt (41) und der zweite Abschnitt (42) schräg zu der Längsachse (A) angeordnete Kontaktflächen (41a, 42a) zur Kontaktierung miteinander aufweisen, und die Stromeinspeiseanordnungen (40) jeweils an einem Wanddurchtritt (15) durch eine Wand (14) des Reaktorbehälters (10) verlaufen.

2. Reaktor (100, 200) nach Anspruch 1, bei dem eine stoffschlüssige Verbindung, zwischen den ersten Abschnitten (41) der Stromeinspeiseanordnungen (40) und den jeweiligen Rohrstrecken (21, 22) oder den jeweiligen Gruppen von Rohrstrecken (21, 22) bereitgestellt ist, oder bei dem die ersten Abschnitte (41) der Stromeinspeiseanordnungen (40) und die jeweiligen Rohrstrecken (21, 22) oder die jeweiligen Gruppen von Rohrstrecken (21, 22) einstückig ausgebildet sind.

3. Reaktor (100, 200) nach Anspruch 1 oder 2, bei dem die konisch ausgebildeten Kontaktflächen (41a, 42a) des ersten Abschnitts (41) und des zweiten Abschnitts (42) der Stromeinspeiseanordnungen (40) als konische Innen- und Außenflächen ausgebildet sind, die sich durch ein oder Zusammenschieben des ersten Abschnitts (41) und des zweiten Abschnitts (42) der Stromeinspeiseanordnungen (40) in Kontakt miteinander bringen lassen.

4. Reaktor (100, 200) nach einem der vorstehenden Ansprüche, bei dem die konischen Kontaktflächen (41a, 42a) als Innen- und Außenflächen eines Kegelmantels oder als Innen- und Außenflächen des konischen Mantels eines Kegelstumpfs ausgebildet sind.

5. Reaktor (100, 200) nach Anspruch 4, bei dem die konischen Kontaktflächen einen Konuswinkel von 40 bis 120° einschließen.

6. Reaktor (100, 200) nach Anspruch 4 oder 5, bei dem ein elastisch verformbares Vorspannelement (44) bereitgestellt ist, das den zweiten Abschnitt (42) der Stromeinspeiseanordnungen (40) entlang der Längsachse (A) in Richtung des ersten Abschnitts (41) drückt.

7. Reaktor (100, 200) nach einem der Ansprüche 1 bis 3, bei dem die Kontaktflächen (41a, 42a) als Flächen von Gewindegängen ausgebildet sind.

8. Reaktor (100, 200) nach einem der vorstehenden Ansprüche, bei dem der zweite Abschnitt (42) der Stromeinspeiseanordnungen (40) mit oberflächenvergrößernden Elementen (45) versehen und/oder verbunden ist.

**9.** Reaktor (100, 200) nach einem der vorstehenden Ansprüche, bei dem die Stromeinspeiseanordnungen (40) jeweils längsbeweglich in ihren jeweiligen Wanddurchtritten (15) durch die Wand (14) des Reaktorbehälters (10) geführt sind.

**10.** Reaktor (100, 200) nach einem der vorstehenden Ansprüche, bei dem die Stromeinspeiseanordnungen (40) außerhalb des Reaktorbehälters (10) elektrisch mittels flexiblen Anschlusselementen mit den Stromanschlüssen einer Stromquelle (50) verbunden oder verbindbar sind.

**11.** Reaktor (100) nach einem der vorstehenden Ansprüche, bei dem das oder die Reaktionsrohre (20) einen oder mehrere Umkehrbögen (23) in dem Reaktorbehälter (10) aufweisen.

**12.** Reaktor (200) nach einem der Ansprüche 1 bis 10, bei dem mehrere Reaktionsrohre (22) ohne Umkehrbögen (23) in dem Reaktorbehälter (10) verlaufen.

**13.** Reaktor (100, 200) nach Anspruch 11, der als Reaktor (100) zum Steamcracken ausgebildet ist, oder nach Anspruch 12, der als Reaktor (200) zur Dampfreformierung, zur Trockenreformierung oder zur katalytischen Dehydrierung von Alkanen ausgebildet ist.

**14.** Reaktor (100, 200) nach einem der vorstehenden Ansprüche, bei dem der zweite Abschnitt (42) zumindest zum Teil aus einem Werkstoff gebildet ist, der aus der Gruppe Molybdän, Wolfram, Tantal, Niob und Chrom ausgewählt ist, oder aus aus einer Legierung gebildet ist, die massenanteilig mindestens 50% eines Metalls aus der Gruppe Molybdän, Wolfram, Tantal, Niob, Nickel und Chrom aufweist.

**15.** Verfahren zur Durchführung einer chemischen Reaktion, bei dem ein Reaktor (100, 200) verwendet wird, der einen Reaktorbehälter (10) und ein oder mehrere Reaktionsrohre (20) aufweist, wobei eine Anzahl von Rohrstrecken (21, 22) des einen oder der mehreren Reaktionsrohre (20) innerhalb des Reaktorbehälters verläuft und wobei die Rohrstrecken (21, 22) in einem Stromeinspeisebereich (11) zur elektrischen Beheizung der Rohrstrecken jeweils elektrisch mit einem oder mehreren Stromanschlüssen (U, V, W) verbunden werden, **dadurch gekennzeichnet, dass** ein Reaktor (100, 200) verwendet wird, bei dem in dem Stromeinspeisebereich (11) Stromeinspeiseanordnungen (40) angeordnet sind, an die jeweils eine der Rohrstrecken (21, 22) oder jeweils eine Gruppe der Rohrstrecken (21, 22) elektrisch angebunden ist, wobei die Stromeinspeiseanordnungen (40) jeweils einen ersten Abschnitt (41) und einen zweiten Abschnitt (42) aufweisen, wobei der erste Abschnitt (41) sich ausgehend von der jeweiligen Rohrstrecke (21, 22) oder der jeweiligen Gruppe von Rohrstrecken (21, 22) oder einem hiermit verbundenen Element entlang einer Längsachse (A) erstreckt, der erste Abschnitt (41) den zweiten Abschnitt (42) oder der zweite Abschnitt (42) den ersten Abschnitt (41) jeweils in einem Bereich der Stromeinspeiseanordnungen (40) zumindest teilweise hülsenartig umgibt, der erste Abschnitt (41) und der zweite Abschnitt (42) schräg zu der Längsachse (A) angeordnete Kontaktflächen (41a, 42a) zur Kontaktierung miteinander aufweisen, und die Stromeinspeiseanordnungen (40) jeweils an einem Wanddurchtritt (15) durch eine Wand (14) des Reaktorbehälters (10) verlaufen.

**Claims**

**1.** A reactor (100, 200) for performing a chemical reaction, comprising a reactor vessel (10) and one or more reaction tubes (20), wherein a number of tube sections (21, 22) of the one or more reaction tubes (20) run within the reactor vessel and wherein the tube sections (21, 22) are each electrically connected or connectable to one or more power connections in a current in-feed region (11) for electrical heating of the tube sections, **characterized in that** in the current in-feed region (11), current in-feed arrangements (40) are arranged to which in each case one of the tube sections (21, 22) or in each case a group of the tube sections (21, 22) is electrically connected, wherein the current in-feed arrangements (40) each comprise a first portion (41) and a second portion (42), wherein the first portion (41) extends along a longitudinal axis (A) starting from the respective tube section (21, 22) or the respective group of tube sections (21, 22) or an element connected thereto, the first portion (41) surrounds the second portion (42) or the second portion (42) surrounds the first portion (41) in each case in a region of the current in-feed arrangements (40) at least partially in a sleeve-like manner, the first portion (41) and the second portion (42) comprise contact surfaces (41a, 42a) arranged obliquely to the longitudinal axis (A) for contacting one another, and the current in-feed arrangements (40) each run through a wall (14) of the reactor vessel (10) at a wall passage (15).

**2.** The reactor (100, 200) according to claim 1, in which an integral connection is provided between the first portions (41) of the current in-feed arrangements (40) and the respective tube sections (21, 22) or the respective groups of tube sections (21, 22), or in which the first portions (41) of the current in-feed arrangements (40) and the respective tube sections (21, 22) or the respective groups of tube sections (21, 22) are formed as a single piece.

3. The reactor (100, 200) according to claim 1 or 2, in which the conical contact surfaces (41a, 42a) of the first portion (41) and of the second portion (42) of the current in-feed arrangements (40) are designed as conical inner and outer surfaces which can be brought into contact with one another by or pushing together the first portion (41) and the second portion (42) of the current in-feed arrangements (40).

4. The reactor (100, 200) according to any one of the preceding claims, in which the conical contact surfaces (41a, 42a) are designed as inner and outer surfaces of a cone-shaped shell or as inner and outer surfaces of the conical shell of a truncated cone.

5. The reactor (100, 200) according to claim 4, in which the conical contact surfaces form a cone angle of 40 to 120°.

6. The reactor (100, 200) according to claim 4 or 5, in which an elastically deformable pretensioning element (44) is provided which presses the second portion (42) of the current in-feed arrangements (40) along the longitudinal axis (A) in the direction of the first portion (41).

7. The reactor (100, 200) according to any one of claims 1 to 3, in which the contact surfaces (41a, 42a) are designed as surfaces of threads.

8. The reactor (100, 200) according to any one of the preceding claims, in which the second portion (42) of the current in-feed arrangements (40) is provided and/or connected to surface-enlarging elements (45).

9. The reactor (100, 200) according to any one of the preceding claims, in which the current in-feed arrangements (40) are each guided in a longitudinally movable manner in their respective wall passages (15) through the wall (14) of the reactor vessel (10).

10. The reactor (100, 200) according to any one of the preceding claims, in which the current in-feed arrangements (40) outside of the reactor vessel (10) are electrically connected or connectable to the power connections of a power source (50) by means of flexible connection elements.

11. The reactor (100) according to any one of the preceding claims, in which the reaction tube(s) (20) comprise one or more returns bends (23) in the reactor vessel (10).

12. The reactor (200) according to any one of claims 1 to 10, in which a plurality of reaction tubes (22) run in the reactor vessel (10) without returns bends (23).

13. The reactor (100, 200) according to claim 11, which is designed as a reactor (100) for steam cracking, or according to claim 12, which is designed as a reactor (200) for steam reforming, for dry reforming or for the catalytic dehydrogenation of alkanes.

14. The reactor (100, 200) according to any one of the preceding claims, in which the second portion (42) is formed at least in part from a material selected from the group of molybdenum, tungsten, tantalum, niobium and chromium, or is formed from from an alloy which comprises at least 50% by weight of a metal from the group of molybdenum, tungsten, tantalum, niobium, nickel and chromium.

15. A method for performing a chemical reaction, in which a reactor (100, 200) is used which comprises a reactor vessel (10) and one or more reaction tubes (20), wherein a number of tube sections (21, 22) of the one or more reaction tubes (20) run within the reactor vessel and wherein the tube sections (21, 22) are each electrically connected to one or more power connections (U, V, W) in a current in-feed region (11) for electrical heating of the tube sections, **characterized in that** a reactor (100, 200) is used in which in the current in-feed region (11) current in-feed arrangements (40) are arranged to which in each case one of the tube sections (21, 22) or in each case a group of the tube sections (21, 22) is electrically connected, wherein the current in-feed arrangements (40) each comprise a first portion (41) and a second portion (42), wherein the first portion (41) extends along a longitudinal axis (A) starting from the respective tube section (21, 22) or the respective group of tube sections (21, 22) or an element connected thereto, the first portion (41) surrounds the second portion (42) or the second portion (42) surrounds the first portion (41) in each case in a region of the current in-feed arrangements (40) at least partially in a sleeve-like manner, the first portion (41) and the second portion (42) comprise contact surfaces (41a, 42a) arranged obliquely to the longitudinal axis (A) for contacting one another, and the current in-feed arrangements (40) each run through a wall (14) of the reactor vessel (10) at a wall passage (15).

**Revendications**

1. Réacteur (100, 200) permettant de mettre en oeuvre une réaction chimique, lequel présente une cuve de réacteur (10) et un ou plusieurs tubes de réaction (20), un certain nombre de tronçons de tube (21, 22) du ou des tubes de réaction (20) s'étendant à l'intérieur de la cuve de réacteur et les tronçons de tube (21, 22) étant connectés ou pouvant être connectés respectivement électriquement à une ou plusieurs connexions électriques dans une zone d'alimentation en courant (11) pour le chauffage électrique des tronçons de tube, **caractérisé en ce que** des agencements d'alimentation en courant (40) sont disposés dans la zone d'alimentation en courant (11), auxquels respectivement l'un des tronçons de tube (21, 22) ou respectivement un groupe de tronçons de tube (21, 22) est relié électriquement, les agencements d'alimentation en courant (40) présentant respectivement une première section (41) et une seconde section (42), la première section (41) s'étendant le long d'un axe longitudinal (A) à partir du tronçon de tube (21, 22) respectif ou du groupe respectif de tronçons de tube (21, 22) ou d'un élément relié à celui-ci, la première section (41) entourant au moins partiellement la seconde section (42) en forme de manchon ou la seconde section (42) entourant au moins partiellement la première section (41) en forme de manchon, respectivement dans une zone des agencements d'alimentation en courant (40), la première section (41) et la seconde section (42) présentant des surfaces de contact (41a, 42a) disposées inclinées par rapport à l'axe longitudinal (A) pour la mise en contact l'une avec l'autre, et les agencements d'alimentation en courant (40) s'étendant respectivement à travers une paroi (14) de la cuve de réacteur (10) au niveau d'un passage de paroi (15).

2. Réacteur (100, 200) selon la revendication 1, dans lequel une liaison par matière est prévue entre les premières sections (41) des agencements d'alimentation en courant (40) et les tronçons de tube (21, 22) respectifs ou les groupes respectifs de tronçons de tube (21, 22), ou dans lequel les premières sections (41) des agencements d'alimentation en courant (40) et les tronçons de tube (21, 22) respectifs ou les groupes respectifs de tronçons de tube (21, 22) sont conçus d'une seule pièce.

3. Réacteur (100, 200) selon la revendication 1 ou 2, dans lequel les surfaces de contact (41a, 42a) coniques de la première section (41) et de la seconde section (42) des agencements d'alimentation en courant (40) sont conçues en tant que surfaces interne et externe coniques, lesquelles peuvent être amenées en contact l'une avec l'autre par un ou un regroupement de la première section (41) et de la seconde section (42) des agencements d'alimentation en courant (40).

4. Réacteur (100, 200) selon l'une des revendications précédentes, dans lequel les surfaces de contact (41a, 42a) coniques sont conçues en tant que surfaces interne et externe d'une enveloppe de cône ou en tant que surfaces interne et externe de l'enveloppe conique d'un tronc de cône.

5. Réacteur (100, 200) selon la revendication 4, dans lequel les surfaces de contact coniques forment un angle de cône de 40 à 120°.

6. Réacteur (100, 200) selon la revendication 4 ou 5, dans lequel un élément de précontrainte (44) élastiquement déformable est prévu, lequel presse la seconde section (42) des agencements d'alimentation en courant (40) le long de l'axe longitudinal (A) en direction de la première section (41).

7. Réacteur (100, 200) selon l'une des revendications 1 à 3, dans lequel les surfaces de contact (41a, 42a) sont conçues en tant que surfaces de filets.

8. Réacteur (100, 200) selon l'une des revendications précédentes, dans lequel la seconde section (42) des agencements d'alimentation en courant (40) est pourvue d'éléments d'agrandissement de surface (45) et/ou est reliée à ceux-ci.

9. Réacteur (100, 200) selon l'une des revendications précédentes, dans lequel les agencements d'alimentation en courant (40) sont respectivement guidés de manière mobile longitudinalement dans leurs passages de paroi (15) respectifs à travers la paroi (14) de la cuve de réacteur (10).

10. Réacteur (100, 200) selon l'une des revendications précédentes, dans lequel les agencements d'alimentation en courant (40) sont connectés ou peuvent être connectés électriquement aux connexions électriques d'une source de courant (50) à l'extérieur de la cuve de réacteur (10) au moyen d'éléments de connexion flexibles.

11. Réacteur (100) selon l'une des revendications précédentes, dans lequel le ou les tubes de réaction (20) présentent un ou plusieurs coudes de déviation (23) dans la cuve de réacteur (10).

12. Réacteur (200) selon l'une des revendications 1 à 10, dans lequel plusieurs tubes de réaction (22) s'étendent dans la cuve de réacteur (10) sans coudes de déviation (23).

13. Réacteur (100, 200) selon la revendication 11, lequel est conçu en tant que réacteur (100) permettant le vapocraquage, ou selon la revendication 12, lequel est conçu en tant que réacteur (200) permettant le reformage à la vapeur, le reformage à sec ou la déshydrogénation catalytique d'alcanes.

14. Réacteur (100, 200) selon l'une des revendications précédentes, dans lequel la seconde section (42) est formée au moins en partie d'un matériau choisi dans le groupe constitué par le molybdène, le tungstène, le tantale, le niobium et le chrome, ou d'un alliage qui présente au moins 50 % en masse d'un métal du groupe constitué par le molybdène, le tungstène, le tantale, le niobium, le nickel et le chrome.

15. Procédé permettant la mise en oeuvre d'une réaction chimique, dans lequel un réacteur (100, 200) est utilisé, lequel présente une cuve de réacteur (10) et un ou plusieurs tubes de réaction (20), un certain nombre de tronçons de tube (21, 22) du ou des tubes de réaction (20) s'étendant à l'intérieur de la cuve de réacteur et les tronçons de tube (21, 22) étant connectés respectivement électriquement à une ou plusieurs connexions électriques (U, V, W) dans une zone d'alimentation en courant (11) pour le chauffage électrique des tronçons de tube, **caractérisé en ce qu'**un réacteur (100, 200) est utilisé, dans lequel des agencements d'alimentation en courant (40) sont disposés dans la zone d'alimentation en courant (11), auxquels respectivement l'un des tronçons de tube (21, 22) ou respectivement un groupe de tronçons de tube (21, 22) est relié électriquement, les agencements d'alimentation en courant (40) présentant respectivement une première section (41) et une seconde section (42), la première section (41) s'étendant le long d'un axe longitudinal (A) à partir du tronçon de tube (21, 22) respectif ou du groupe respectif de tronçons de tube (21, 22) ou d'un élément connecté à celui-ci, la première section (41) entourant au moins partiellement la seconde section (42) en forme de manchon ou la seconde section (42) entourant au moins partiellement la première section (41) en forme de manchon, respectivement dans une zone des agencements d'alimentation en courant (40), la première section (41) et la seconde section (42) présentant des surfaces de contact (41a, 42a) disposées inclinées par rapport à l'axe longitudinal (A) pour la mise en contact l'une avec l'autre et les agencements d'alimentation en courant (40) s'étendant respectivement à travers une paroi (14) de la cuve de réacteur (10) au niveau d'un passage de paroi (15).

300

13

12'

21

20

10

11'

# Fig. 1

**Fig. 2**

**Fig. 3**

Fig. 4

200

11

M    21    23a    21

10    41a    42a

15    14

40    41

**Fig. 5**

A    42

42b

A - A

41a

42a

40

41

A

45

42b

42

42b

44a

44

A

41

A

42

44a

A

**Fig. 6A**

**Fig. 6B**

Fig. 7A

Fig. 7B

Fig. 7C

Fig. 8A

Fig. 8B

**Fig. 9A**      **Fig. 9B**      **Fig. 9C**

EP 3 950 113 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015004121 A1
- EP 3075704 A1
- WO 2015197181 A1

**In der Beschreibung aufgeführte Nicht-Patentliteratur**

- Ethylene", "Gas Production" und "Propene. Ullmann's Encyclopedia of Industrial Chemistry. 15. Juni 2000